# EUROPEAN PATENT SPECIFICATION

(11) **EP 2 653 395 B1**
(45) Date of publication and mention of the grant of the patent: **19.04.2017**
(21) Application number: 11848705.7
(22) Date of filing: 08.12.2011
(51) Int. Cl.: B65B 55/06, B65B 43/54, B65B 55/04, B65B 55/10

(54) **BEVERAGE FILLING METHOD AND MACHINE**
GETRÄNKEAUSGABEVERFAHREN UND -MASCHINE
MACHINE ET PROCÉDÉ DE REMPLISSAGE DE BOISSON

(30) Priority: 16.12.2010 JP 2010280381
(43) Date of publication of application: 23.10.2013
(73) Proprietor: Dai Nippon Printing Co., Ltd., Tokyo 162-8001 (JP)
(72) Inventor: HAYAKAWA Atsushi, Tokyo 162-8001 (JP); NAKAMURA Yuiko, Tokyo 162-8001 (JP)
(74) Representative: Viering, Jentschura & Partner mbB Patent- und Rechtsanwälte
(86) International application number: PCT/JP2011/078416
(87) International publication number: WO 2012/081489

(56) References cited:
- EP-A1- 1 964 782
- WO-A1-2010/090247
- DE-A1- 4 427 577
- DE-A1- 19 928 325
- JP-A- 7 187 149
- JP-A- 8 164 925
- JP-A- 2007 230 596
- JP-A- 2008 155 941

## Description

### Technical Field

The present invention relates to a soft drink filling method and apparatus for filling a package with soft drink by continuously performing processes of molding bottles and filling the bottles after sterilizing the bottles.

### Background Art

As a drink filling apparatus, a know apparatus includes a molding section for molding a bottle from a preform made of PET (polyethylene-terephthalate) through a blow-molding process, a sterilizing section for sterilizing the bottle molded in the molding section with hydrogen peroxide mist, an air rinsing section for air-rinsing the bottle sterilized in the sterilizing section, a hot-water rinsing section for washing the bottle subjected to air-rinsed treatment in the air rinsing section, and a filling and sealing section for filling the bottle rinsed by hot water with drink and sealing the same. These sections are continuously connected or coupled to each other and the bottles are continuously travelled or delivered by travelling (delivering) means. The apparatus is also provided with a chamber which covers the delivering route from the molding section to the filling section. According to this known drink filling apparatus, bottle sterilization effect can be enhanced by the hydrogen peroxide mist using heat applied during the bottle molding process (for example, refer to Patent Document 1).

With a soft drink filling apparatus, there is known a technology in which when a molded bottle is sterilized with the hydrogen peroxide mist and then rinsed in the hot-water rinsing section, aseptic water heated to a temperature of 70°C is supplied into a bottle for 3 seconds (for example, refer to Patent Document 2).

Furthermore, recently, there is also known an apparatus, as a mineral water filling apparatus, in which hot-water is supplied into a bottle made of PET to thereby sterilize the interior of the bottle, and thereafter, the bottle is filled up with soft drink (for example, refer to Patent Documents 3 and 4).

Still furthermore, in these days, in order to attempt reducing cost for manufacturing bottles made of PET, it has been attempted to make thin PET bottles. However, in the case of reducing the PET bottle thickness, the bottle is liable to be easily thermally deformed, which may lead to deterioration and revaluation of the bottle as being defective and inconvenient. To obviate such defect, there has also been proposed a technology in which the bottle is filled with soft drink in an over-flow manner and the bottle is then capped (for example, refer to Patent Document 3), or cold water is atomized to the outer surface of the bottle simultaneously with the supply of hot-water into the bottle (for example, refer to Patent Document 3).

### Prior Art Documents

### Patent Documents

Patent Document 1: Japanese Patent Laid-open Publication No. 2006-111295
Patent Document 2: Japanese Patent Publication No. 4012653
Patent Document 3: Japanese Patent Laid-open Publication No. 2000-85888
Patent Document 4: Japanese Patent Laid-open Publication No. HEI 9-124010

### Concept of The Invention

### Problem to be solved by The Invention

In the filling methods described in the Patent Documents 1 and 2, the PET bottles to be filled up with the soft drink are sterilized with hydrogen peroxide, so that there is a possibility of mixing residual hydrogen peroxide into the soft drink. Accordingly, such filling methods cannot be utilized in the case when the soft drink is mineral water.

Furthermore, in the filling methods described in the Patent Documents 2 and 3, since the bottles are rapidly heated for a short time, the PET bottles may be easily deformed by heat, and in addition, a large amount of aseptic hot water is to be used, thus providing a problem. Further, in the filling method described in the Patent Document 4, it is necessary to preliminarily prepare a large amount of cold water and hot water, thus also providing a problem.

In addition does EP 1 964 7782 A1 disclose a filling method and apparatus with container sterilization.

Accordingly, an object of the present invention is to provide method and apparatus for filling a bottle with soft drink for solving the above defects or problems encountered in the conventional art.

### Means for solving The Problems

The inventors of the subject application adopted the following configuration for achieving the above object.

In the followings, although the terms are explained by using reference numerals described in the drawings, the present invention is not limited thereto.

That is, the invention is defined in the independent claims.

The dependent claims contain further embodiments of the present invention.

### Effects of The Invention

According to the present invention, the bottle (1) is molded from the heated preform (6) by a blow molding process, the hot water (w) is supplied into the bottle (1) at a time when the heat applied to the preform (6) remains to thereby sterilize an interior of the bottle by making the hot water of 0.1 mL to 0.2mL per 1cm² contact to an entire inner surface of the bottle (1); and thereafter, the bottle is filled up with the soft drink (a) and then is sealed. Accordingly, the interior of the bottle (1) can be appropriately and speedily sterilized to thereby manufacture the soft drink package superior in quality.

Furthermore, since the hot water (w) of the temperature of 70 °C to 80°C contacts the bottle (1) for a short time, the bottle is less shrinked, and hence, the deformation can be prevented even if a thin bottle (1) is used, which may lead to the reduction of the used amount of bottle forming material such as PET.

Furthermore, since the interior of the bottle (1) can be sterilized only by supplying the hot water (w) into the bottle (1) for a short time, the amount of the hot water to be used can be remarkably reduced, which will result in the reduction of the heat energy (amount of steam to be used) for sterilizing the hot water (w) and reduction of the exhaust amount of carbon dioxide.

All the steps from molding the bottle (1) from the heated preform (6) by the blow molding process to filling the bottle with a soft drink (a) and then sealing the same is performed while continuously travelling the bottles (1), and before the sterilization of the molded bottles (1), the temperature of the bottles (1) on which heat from the preform heating process remains are inspected, in which bottles (1) having a temperature not more than a predetermined value are rejected and only bottles (1) having a temperature reaching the predetermined value are sterilized and filled up with the soft drink. Therefore, according to such steps, only the bottles (1) reaching the predetermined temperature are subjected to the sterilization treatment, so that only the appropriate soft drink packages guaranteed in quality can be manufactured.

Furthermore, in the case when the outer surface of the bottle is sterilized with hydrogen peroxide by supplying hydrogen peroxide mist ( α ) or gas ( β ) onto the outer surface of the bottle before the sterilization of the inner surface of the bottle with hot water, the invasion of the mold adhering to the bottle outer surface can be prevented. Moreover, since the heat from the molding remains on the bottle (1), the concentration and amount of the hydrogen peroxide used for the sterilization of the bottle outer surface can be reduced. By sterilizing the outer surface of the bottle as well as inner surface thereof with the hot water, the bottle is made to be easily contracted. In addition, although the use of energy for creating an aseptic state may result in cost increasing, such defect can be solved by sterilizing the bottle outer surface with hydrogen peroxide mist or gas during the remaining of the heat from molding the bottle. Furthermore, even in such sterilization treatment of the bottle outer surface, since the hydrogen peroxide does not contact the inner surface of the bottle, the entering of the hydrogen peroxide into the bottle can be effectively prevented, thus being superior in this point of view.

Furthermore, in the case when the bottles (1) are delivered with the neck portions (1a) thereof being gripped by the grippers (28 and others), the mutual contacting between the adjacent bottles can be prevented. According to such delivering system by using the grippers (28 and others), in comparison with conventional bottle delivering system by using air, bioburden invading into the hot water rinsing section (91) from the molding section (7) can be lowered and sterility assurance level (SAL) of the products can be improved. Furthermore, deformation, injury, breakage and the like can be prevented. Still furthermore, in a conventional technology, at the time of changing the screw, guide members and so on which are used for introducing the bottles, it is required to change the screw, guide members and the like in accordance with size of body portion, shape or like of the bottle. According to the present invention, however, such changing work can be eliminated. Since the shape and size of the neck portion (1a) of the bottle (1) are constant regardless of the size or shape of the body portion of the bottle, the bottle delivering system using the grippers, the screw, guide members and the like which are required in the conventional technology can be eliminated and the work for changing such members can be eliminated.

In an embodiment of the present invention, according to the structure in which the wheels are sectioned into series of star wheels and the respective star wheels are driven by independent corresponding servomotors (S1 and others), the wheels provided for the temperature inspecting section (46), the hot water rinsing section (91), the filling section (10) and so on are driven respectively by independent servomotors (S1 and others), and hence, the respective sections can by synchronously driven and operated.

In the structure in which the temperature inspection unit (46 and others) for evaluating the quality of the bottles (1) by detecting the temperature of the bottles (1), the bottles having a temperature capable of enhancing the sterilization effect can be fed to the hot water rinsing section (91).

In an embodiment of the present invention, according to the structure in which the gripper interference prevention unit (42 and others) for preventing interference between respective grippers (28, 37) from each other at a time when one of the wheels (19b) on the molding section (7) side and the downstream side wheel (36a) adjacent to the aforementioned wheel is stopped, the grippers can be prevented from being damaged. In addition, by continuously rotating the downstream side wheels, the normally molded bottles (1) are delivered to the hot water rinsing section (91) and the filling section (10) to thereby prevent the generation of useless bottles. Furthermore, since the bottles (1) can be travelled without staying on the downstream side of the hot water rinsing section (91), the bottles (1) can be prevented from being deformed or like by the long-time supply of the hot water to the bottles (1). Moreover, since the bottle (1) subjected to the inspection in the temperature inspecting section (46) reach the hot water rinsing section with the remaining heat being maintained, the bottles (1) can be appropriately sterilized and generation of useless bottles can be hence prevented.

### Brief Description of The Drawings

[Fig. 1] is a front view of a bottle as a soft drink package manufactured by the soft drink filling method and soft drink filling apparatus according to the present invention.
[Fig. 2] is a schematic plan view of the soft drink filling apparatus according to a first embodiment of the present invention.
[Fig. 3A] is a view showing a process of supplying a preform to the soft drink filling apparatus.
[Fig. 3B] is a view showing a process of supplying the preform to the molding section.
[Fig. 3C] is a view showing a preform heating process.
[Fig. 3D] is a view showing a blow-molding process.
[Fig. 3E] is a view showing a process of discharging the bottle from a mold.
[Fig. 3F] is a view showing a neck portion gripping process by a gripper.
[Fig. 3G] is a view showing a bottle body portion inspection process.
[Fig. 3H] is a view showing a bottle temperature inspection process.
[Fig. 3I] is a view showing a bottle support ring inspection process.
[Fig. 3J] is a view showing a process of inspecting a top surface of the neck portion of the bottle.
[Fig. 3K] is a view showing a bottle bottom inspection process.
[Fig. 3L] is a view showing a bottle sterilizing process with condensed mist of hydrogen peroxide.
[Fig. 3M] is a view showing a bottle hot-water rinsing process.
[Fig. 3N] is a view showing a soft drink filling process.
[Fig. 3O] is a view showing a bottle sealing process by using a cap.
[Fig. 4] is a schematic plan view showing grippers, with a wheel, for delivering the bottles.
[Fig. 5] is a partially enlarged view of an inspecting section shown in Fig. 2.
[Fig. 6] is a view shown with arrows VII-VII in Fig. 2.
[Fig. 7] is a schematic plan view showing a gripper provided with an interference prevention means together with a wheel.
[Fig. 8] is a schematic plane view showing a gripper provided with defective bottle removing means together with a wheel.
[Fig. 9A] is a side view showing the defective bottle removing (rejecting) means during an inactive state of the apparatus.
[Fig. 9B] is a side view showing the defective bottle removing means during an active (operating) state of the apparatus.
[Fig. 10] is a partially cutout front view of a mist generation device.
[Fig. 11] is a view showing a positive pressure creating means shown from arrows XI-XI in Fig. 2.
[Fig. 12A] is a plan view showing a state in which a pair of clamping pieces of the gripper, which can vertically invert the bottle in attitude, are opened.
[Fig. 12B] is a plan view showing a state in which a pair of clamping pieces of the gripper, which can vertically invert the bottle in attitude, are closed.
[Fig. 13] is a plan view showing a cam device, partially cut out, for vertically inverting the gripper shown in Figs. 12A and 12B.
[Fig. 14] is a schematic plan view, similar to Fig. 7, showing another example of an interference prevention means.
[Fig. 15] is a schematic elevational plan view showing a further example of an interference prevention means.

### Mode for embodying The Invention

Hereunder, modes for embodying the present invention will be explained.

First, a soft drink package manufactured by a soft drink filling apparatus of the present invention will be explained. The soft drink package is provided with a bottle 1 as a container and a cap 2 as a lid. Letter "a" shows soft drink filling the bottle 1.

The bottle 1 has a circular cylindrical body portion, but another shape such as rectangular cylindrical shape or like may be taken. The body has a closed bottom and an opened upper circular neck portion 1a.

The neck portion 1a is formed with a male screw 3, and the cap 2 is formed with a female screw 4 which is engaged with the male screw 3 to thereby seal the opening of the neck portion 1a. The neck portion 1a is further provided with a support ring 5 at a position below the male screw 3. As described hereinafter, the bottle 1 is travelled inside the soft drink filling apparatus in a state of being supported by a gripper through the support ring 5.

The bottle 1 is formed, as described hereinafter, by blow-molding the preform 6 made of PET having approximately test-tube shape. The bottle 1 may be made of resin such as polypropylene, polyethylene or like other than only the PET. The preform 6 is molded through an injection molding or like process or treatment and is provided with a neck portion 1a having a shape similar to the body having approximately test-tube shape. The neck portion 1a is formed with the male screw 3 at the time of molding the preform 6.

The cap 2 is formed through injection molding or like process with a resin material such as polyethylene, polypropylene or like, and the female screw 4 is also formed at the time of molding the cap 2.

Next, a filling apparatus for filling the bottle 1 with soft drink "a" will be explained.

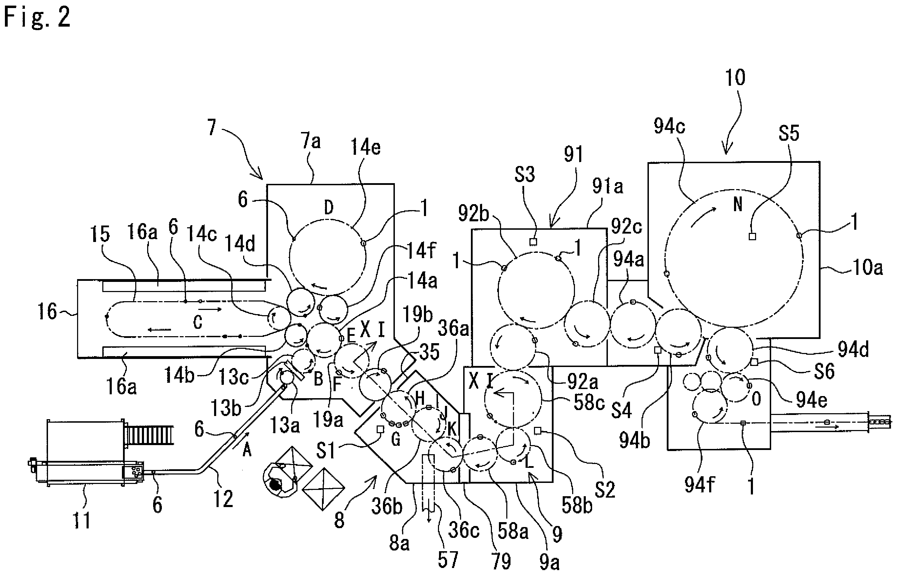

As shown in Fig. 2, the filling apparatus is equipped with a molding section 7 for molding the bottle 1, an inspecting section 8 for inspecting the molded bottle 1, a sterilizing section 9 for sterilizing an outer surface of the bottle 1, a hot-water rinsing section 91 for supplying hot water into the bottle so as to sterilize the inner surface of the bottle 1, and a filling section 10 for filling the bottle 1 with drink "a" and then sealing the bottle 1.

The bottle molding section 7 is covered entirely with a chamber 7a. The chamber 7a of the molding section 7 is provided with a supply port for supplying the preform 6 and a discharge port for discharging the bottle 1.

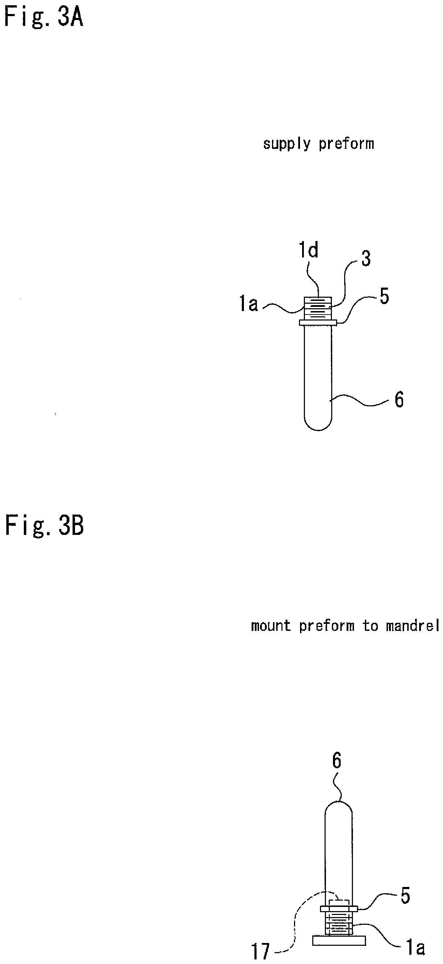

A preform supplying machine 11 is located in the vicinity of the chamber 7a of the molding section 7. A number of preforms 6 shown in Fig. 3A are loaded to the preform supplying machine 11. The preform supplying machine 11 feeds the preforms one by one into the molding section 7 through the supply port by a preform conveyer 12 in an electing state in which the neck portion 1a of each preform 6 is directed upward as shown in Fig. 3A.

Since the preform supplying machine 11 is a known one, the details thereof are hence omitted herein.

As shown in Fig. 2, an upstream side series of star wheels, respectively wheel train, a downstream side wheel train, and a turn table disposed between the upstream side and downstream side wheel trains are arranged inside the chamber 7a of the molding section 7.

The upstream side wheel train includes a start end wheel 13a as a horizontal wheel, which is connected to the preform conveyer 12. A number of grippers, not shown, each gripping the neck portion 1a of each of the preforms 6, are arranged around the start end wheel 13a with constant pitch. These grippers are rotated in association with the rotation of the start end wheel 13a, and the preforms 6 delivered from the preform conveyer 12 are gripped at portions near the support rings 25 and then delivered to the next intermediate wheel 13b.

The intermediate wheel 13b is arranged perpendicularly, around which a number of forks, not shown, are provided with constant pitch. In the intermediate wheel 13b, each of the forks receives each preform 6 gripped by the gripper of the start end wheel 13a at a portion below the support ring 5 in a clamping manner, and thereafter, the intermediate wheel 13b rotates upward so that the preform stands upward in an inverted attitude. A terminal end wheel 13c is a horizontal wheel like the start end wheel 13a provided with grippers and acts to receive and grip the preforms 6 inverted by the intermediate wheel 13b by the grippers.

The turn table train includes first to sixth turn tables, arranged in circular form, 14a, 14b, 14c, 14d, 14e and 14f, around which an endless chain 15 is stretched. The chain 15 extends around the third turn table 14c to thereby form a bypass route so that the extended portion of the chain 13 travels inside a heating chamber 16 additionally provided inside the chamber 7a. The chain 15 is capable of continuously travelling in one direction indicated by an arrow in Fig. 2 together with the rotation of the first to sixth turn tables 14a, 14b, 14c, 14d, 14e and 14f.

A number of mandrels 17 shown in Fig. 3B are connected to the chain 15 with constant pitch. The mandrels 17 are capable of being traveled in the standing attitude on the turn tables 14a, 14b, 14c, 14d, 14e and 14f under pulling guidance of the chain 15, and the mandrels 17 are supported to be rotatable around their axes on the chain 15.

The first turn table 14a is connected to the terminal end wheel 13c of the upstream side wheel train, and each mandrel 17 enters, as shown in Fig. 3B, inside the neck portion 1a of the preform 6 held by the gripper of the terminal end wheel 13c in the inverted standing attitude and then receives the preform 6 in this state.

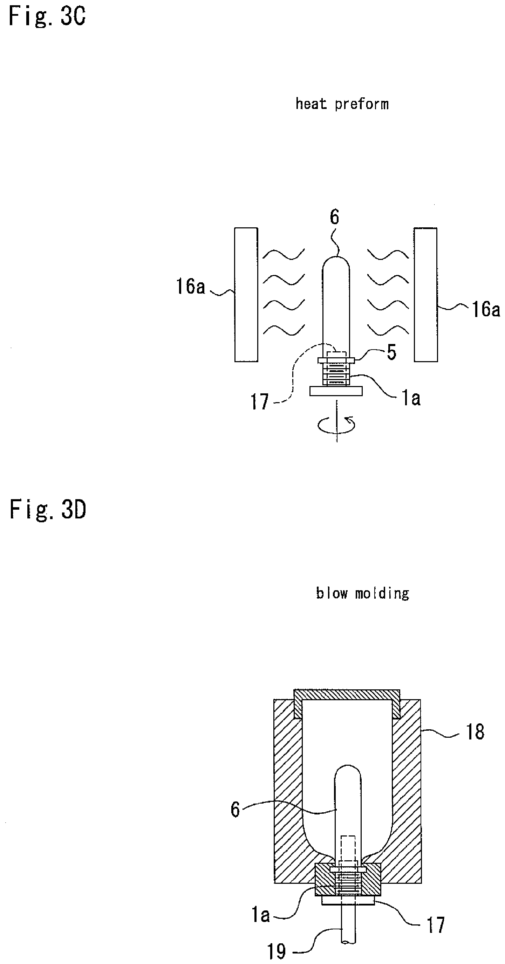

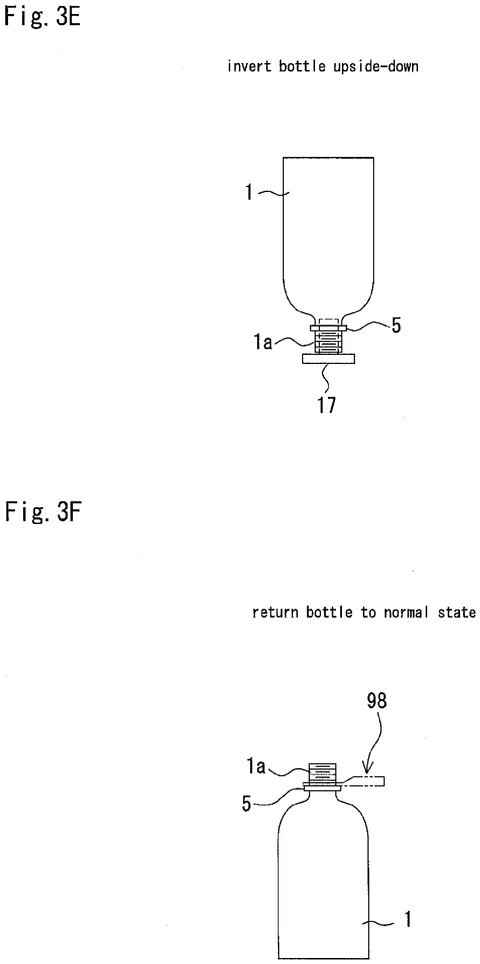

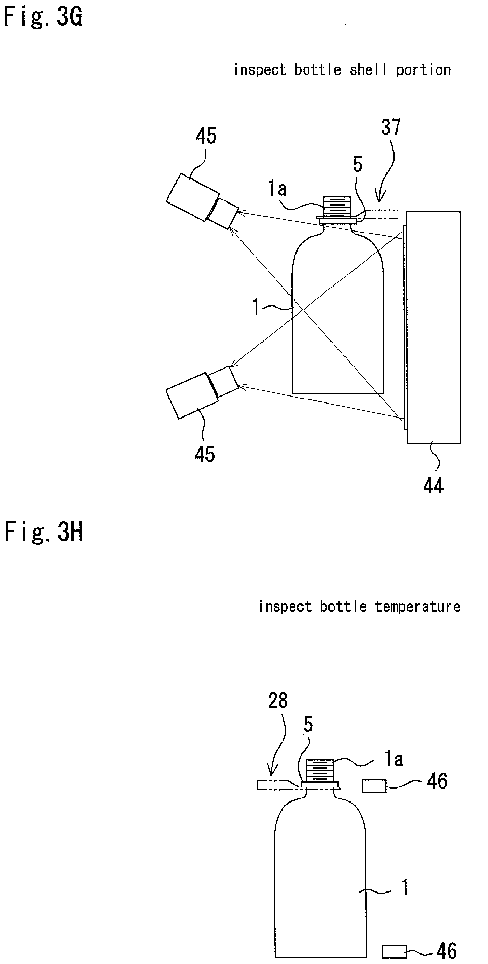

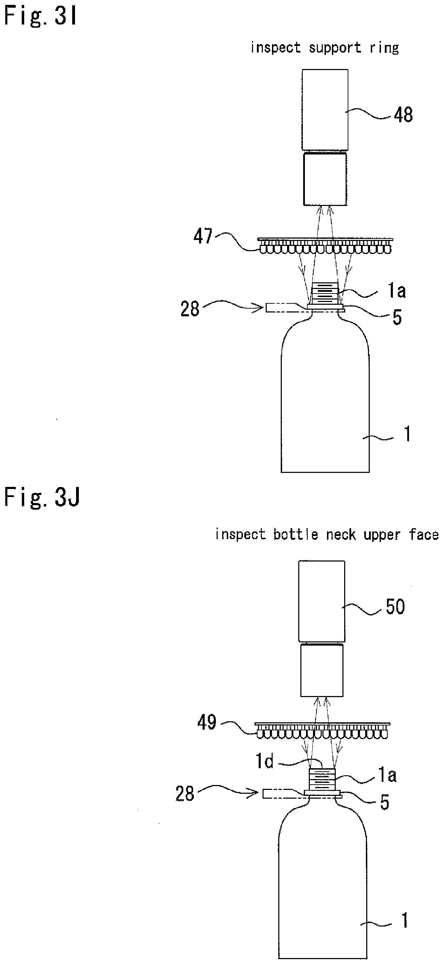

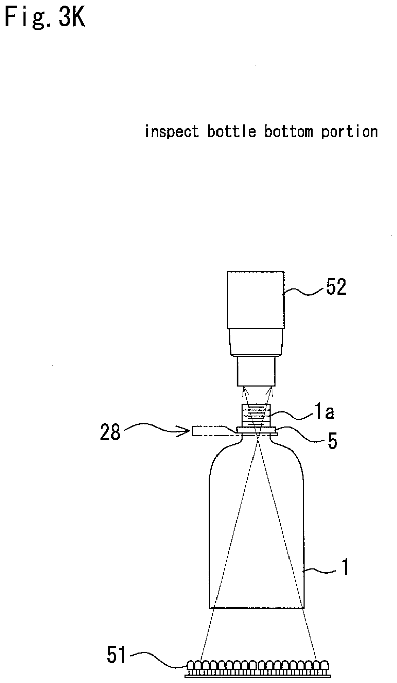

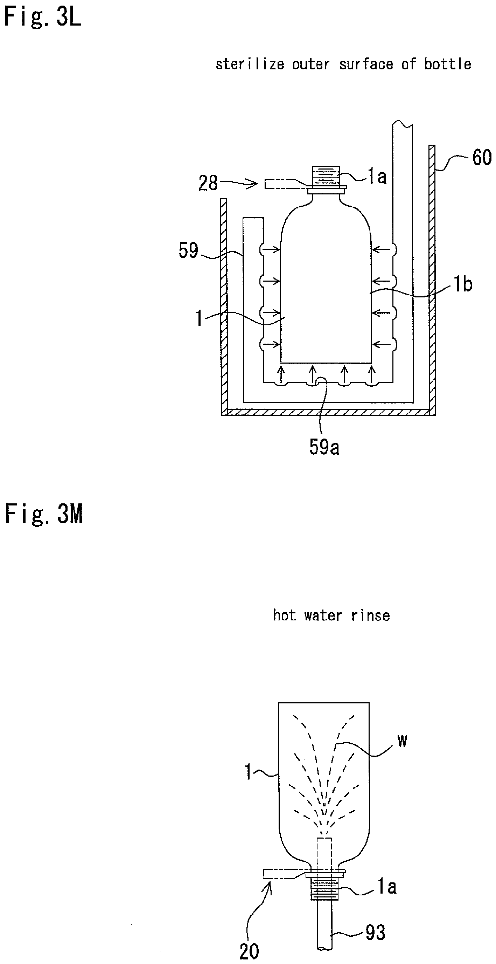

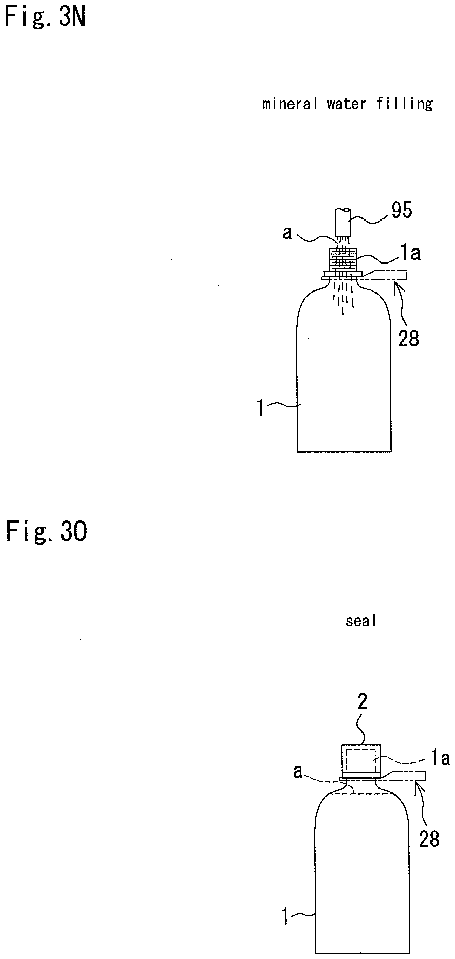

A heater 16a is provided on the inside wall surface of the heating chamber 16 as shown in Fig. 3C. The mandrel 17 receiving the preform 6 travels inside the heating chamber 16 along the heater 16a, and during the traveling, the preform 6 held by the mandrel 17 is heated by the heater 16a as shown in Fig. 3C. According to this heating, the temperature of the preform 6 increases up to a temperature capable of being subjected to the blow-molding treatment. Further, each of the mandrels 17 has a flanged portion which contacts a rail, not shown, during the traveling thereof, and is rotated together with the preform 6. Accordingly, the portion of the preform 6 lower than the neck portion 1a (upper portion in the state shown in Fig. 3) is uniformly heated.

Around the fifth turn table 14e, a number of molds 18 for the blow-molding treatment are disposed with constant pitch as shown in Fig. 3D. The blow-molding molds 18 are rotatable together with the rotation of the fifth turn table 14e.

Each of the blow-molding mold 18 is splittable into two laterally symmetrical parts, and when the heated preform 6 reaches from the fourth turn table 14d, the mold 18 clamps the preform 6 together with the mandrel 17 while rotating around the fifth turn table 14e. The mandrel 17 is formed with a through hole at a central portion thereof, and under this state, a blow nozzle 19 is inserted into the through hole and then into the preform 6. Then, gas, such as air, is blown into the preform 6 from the blow nozzle 19, thus molding a bottle 1 inside the mode 18.

The blow-molding mold 18 is opened to a position approaching the sixth turn table 14f, and then, the bottle 1 is released therefrom. The bottle 1 released from the mold 18 travels toward the first turn table 14a in a state of being held by the mandrel 17 as shown in Fig. 3E.

The start end wheel 19a in the downstream side wheel train is connected to the first turn table 14a, and the terminal end wheel 19b contacts the discharge port of the chamber 7a of the molding section 7.

When the bottle 1 held by the mandrel 17 reaches the start end wheel 14a as shown in Fig. 3E by the rotation of the first turn table 14a, the start end wheel 19a draws the bottle from the mandrel 17 by gripping the bottle 1 with a gripping member 98 as shown in Fig. 3F, and the bottle is then inverted vertically so as to take normal standing attitude.

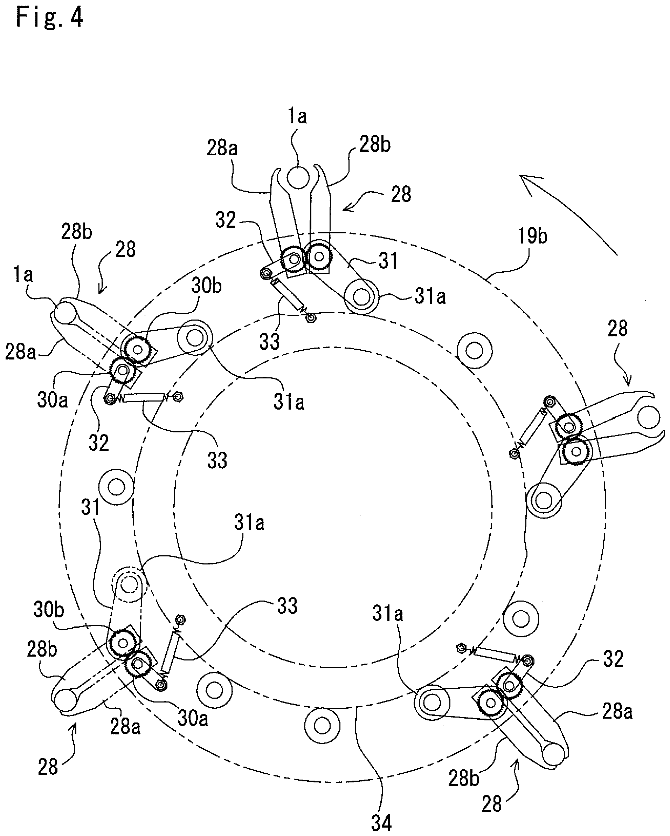

The terminal end wheel 19b is provided with grippers 28 as shown in Fig. 4. Each of the grippers 28 includes a pair of clamping pieces 28a and 28b which clamp the neck portion 1a of the bottle 1 from the outer side thereof. The paired clamping pieces 28a and 28b have base portions respectively supported to the wheel 19b by means of vertical pins to be rotatable. A pair of engaging gear wheels 30a and 30b fixed to the base portions of the clamping pieces 28a and 28b through the vertical pins, respectively. Furthermore, one of the gear wheels 30b is coupled to a cam follower 31a through a lever 31, and the other one of the gear wheels 30a is coupled to the terminal end wheel 19b through a lever 32 and a spring 33. According to tensioning force of this spring 33, the pair of the clamping pieces 28a and 28b are always urged in their opening direction. On the other hand, a cam 34 to which the cam follower 31a contact is fixed to a frame, not shown, inside the terminal end wheel 19b.

According to the operations mentioned above, when the terminal end wheel 19b rotates, the clamping pieces 28a and 28b of the gripper 28 are opened by the sliding motion between the cam follower 31a and the cam 34. Then, the gripper 28 receives the neck portion 1a of the bottle 1 from the gripper 19a of the start end wheel 19a, grips the neck portion 1a of the bottle 1 and holds the bottle 1 in a suspended state. The gripper 28 is then turned with the bottle 1 being held to the next inspecting section 8. When the gripper 28 reaches to the inspecting section 8, the a paired clamping pieces 28a and 28b are opened by the sliding motion between the cam follower 31 a and the cam 34, and the bottle 1 is transferred to the wheel train of the inspecting section 8.

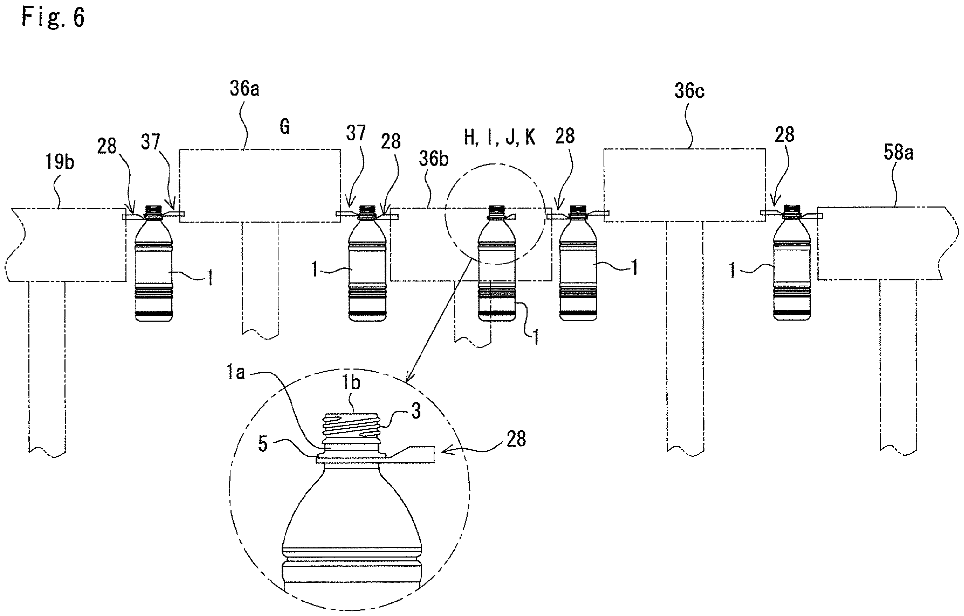

After the gripper 28 of the terminal end wheel 19b receives the bottle 1 from the gripping member 98 of the start end wheel 19a, the gripper 28 delivers the bottle 1 in the state in which the neck portion 1a of the bottle 1 is held at the portion below the support ring 5 as shown in Fig. 6.

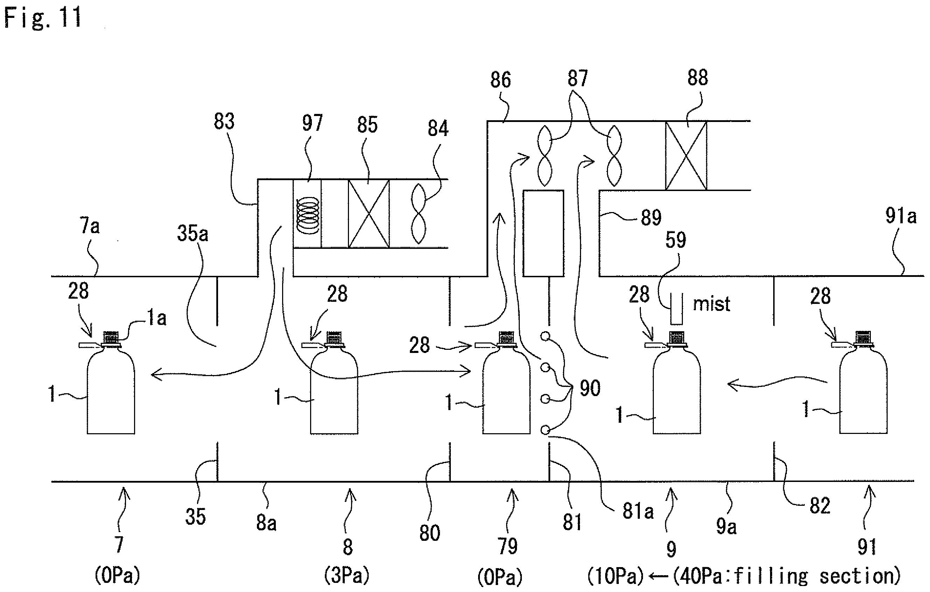

As shown in Fig. 2, the bottle inspecting section 8 is coupled to the bottle molding section 7, and the bottle inspecting section 8 is itself covered entirely with the chamber 8a. As shown in Fig. 11, a bottle passing port 35a through which the bottle 1 passes is formed to a partition wall 35 between the chamber 8a of the inspecting section 8 and the chamber 7a of the molding section 7.

To the inside of the chamber 8a of the inspecting section 8, as shown in Fig. 2, the wheel train which is connected to the terminal end wheel 19b as bottle travelling means on the molding section 7 side. More specifically, the wheel train is constituted by three wheels 36a, 36b, 36c, and a travelling path for the bottles 1 is provided around the outer periphery of these wheels. In addition, Grippers 28 identical to the grippers 28 in the terminal end wheel 19b are provided around each of the wheels 36a, 36b and 36c. Each of the grippers 28 turns around each of the wheels 36a, 36b and 36c in a state of holding the neck portion 1a of the bottle 1, and the bottle 1 is transferred to the terminal end wheel 36c from the start end wheel 36a through the intermediate wheel 36b. According to this operation, the bottles 1 continuously travel on the travelling path around the wheels 36a, 36b and 36c inside the inspecting section 8 from the terminal end wheel 19b arranged in the molding section 7. The gripper 28 grips the neck portion 1a of the bottle 1 by the clamping pieces 28a and 28b of the gripper 28 during the travelling, so that the bottle 1 is travelled in the suspended state.

As shown in Fig. 6, the gripper 28 holds the neck portion 1a of the bottle 1 at the portion above the support ring 5 in the start end wheel 36a, then grips the neck portion 1a of the bottle 1 at the portion below the support ring 5 in the intermediate wheel 36b, and grips the neck portion 1a of the bottle 1 at the portion above the support ring 5 in the terminal end wheel 36c, and in this state, the bottle 1 is transferred from the upstream side toward the downstream side in the inspecting section 8.

A gripper interference prevention means is provided for the start end wheel 36a inside the inspecting section 8 contacting the terminal end wheel 19b on the bottle molding section 7 side. The gripper interference prevention means acts so as not to cause interference between the gripper 28 mounted to the terminal end wheel 19b of the molding section 7 and the gripper 28 mounted to the start end wheel 36a of the inspecting section 8 side at the time when the turn table and the wheels on the bottle molding section side are emergently stopped.

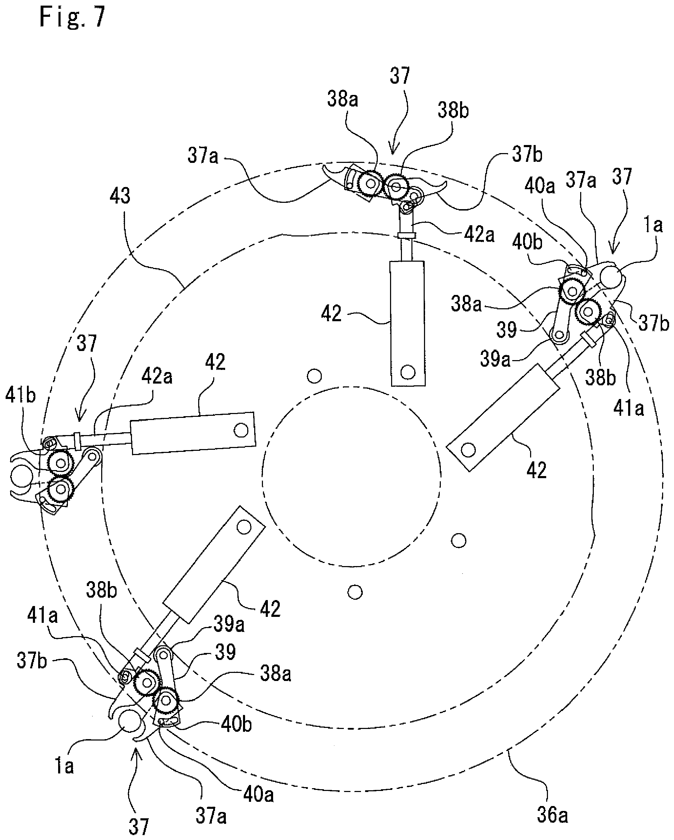

Since such gripper interference prevention means is provided, a gripper 37 of the start end wheel 36a in the inspecting section 8 has a structure different from the gripper 28 as shown in Fig. 7.

That is, as shown in Fig. 7, a number of grippers 37 are provided for the start end wheel 36a in the inspecting section 8 with predetermined pitch. Each of the grippers 37 has a pair of clamping pieces 37a and 37b for clamping the neck portion 1a of the bottle 1 from the outer side thereof, and the base portions of the paired clamping pieces 37a and 37b are supported to the start end wheel 36a to be rotatable by means of vertical pins. A pair of engaging gear wheels 38a and 38b are fixed to the base portions of the clamping pieces 37a and 37b, respectively, by means of vertical pins.

Furthermore, one of the gear wheels 38a is coupled to a cam follower 39a through a lever 39, and one of the clamping pieces 37b is connected to the side opposite to the cam follower 39a of the lever 39 through a pin 40a and a circular-arc-shaped slot 40b.

The other one of the clamping piece 37b is integrated with the other gear wheel 38b, and a piston rod 42a of a piston-cylinder assembly 42 is connected to the clamping piece 37a through a pin 41a and a circular-arc-shaped slot 40b. The piston-cylinder assembly 42 is supported by the start end wheel 36a. A torsion spring, not shown, is attached between the gear wheels 38a, 38b and the wheel 36a, so that the paired clamping pieces 37a and 37b are always urged in their closing direction by twisting force of the torsion spring. Further, the cam follower 39a is always pushed against the cam 43.

According to the structures mentioned above, when the start end wheel 36a on the inspecting section side rotates, each of the grippers 37 acts to open the paired clamping pieces 37a and 37b by the sliding motion between the cam follower 39a and the cam 43, Then, the gripper 37 receives the neck portion 1a of the bottle 1 from the gripper 28 of the start end wheel 19a, grips the bottle neck portion 1a and holds the bottle 1 in a suspended state. The gripper 27 is then turned with the bottle 1 being held. The clamping pieces 37a and 37b are rotated in their opening direction against the twisting force of the torsion spring, and at this time, the respective pins 40a and 41a are slid in the circular-arc-shapes slots 40b and 41b, respectively.

However, there causes a case when some abnormality is generated on the molding section 7 side and the turn table train, and the wheel train on the molding section 7 side have to be emergently stopped. On such occasion, as shown in Fig. 7, a piston rod 42a of the piston-cylinder assembly 42 is contracted to thereby widen the paired clamping pieces 37a and 37b, now in closed state, by angles of about 180 degrees. According to such opening operation, the interference between the gripper 28 mounted to the terminal end wheel 19b of the molding section 7 and the gripper 37 of the start end wheel 36a of the inspecting section 8 can be prevented from causing. In such case, since the start end wheel 36a and succeeding wheels following the next wheel 36b are continuously rotated, the bottles 1 delivered into the inspecting section 8 can be travelled toward the downstream side.

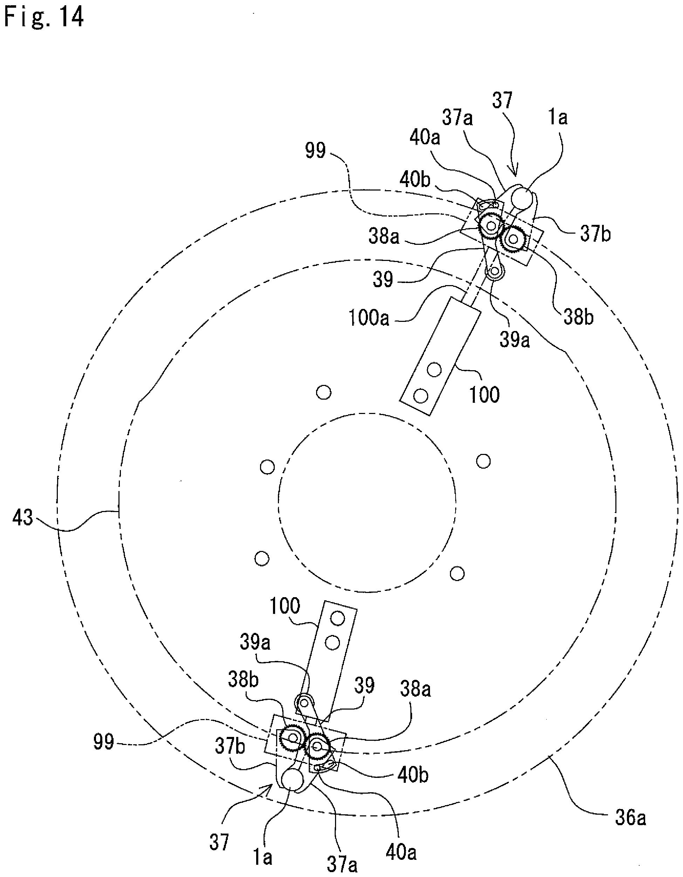

Further, the gripper interference prevention means is not limited to one having the structure described above, and there may be adopted a slid mechanism, as shown in Fig. 14, in which the gripper 37 is reciprocally slid in the radial direction of the start end wheel 36a. In Fig. 14, reference numeral 99 is a holding member for holding the gripper 37, and a piston rod 100a of a piston-cylinder assembly 100 is coupled to the holding member 99. The piston-cylinder assembly 100 is fixed to the start end wheel 36a so as to be disposed along the radial direction thereof.

In a case when some abnormality occurs on the molding section 7 side and the turn table train and the wheel train on the molding section 7 side have to be emergently stopped, as shown in Fig. 14, the piston rod 100a of the piston-cylinder assembly 100 is contracted, and the gripper 37 that projects outward in the radial direction of the start end wheel 36a is retracted inside in the radial direction thereof. According to such retracting motion, the interference between the gripper 28 mounted to the terminal end wheel 19b of the molding section 7 and the gripper 37 mounted to the start end wheel 36a of the inspecting section 8 can be prevented from causing.

Further, with the gripper interference prevention means of the structure shown in Fig. 14, when the piston rod 100a is contracted, the cam 43 performing the open/close operation of the paired clamping pieces 37a and 37b of the gripper 37 escapes to a position not abutting against the cam follower 39a by moving in the axial direction of the wheel 36a by driving another piston-cylinder assembly, for example.

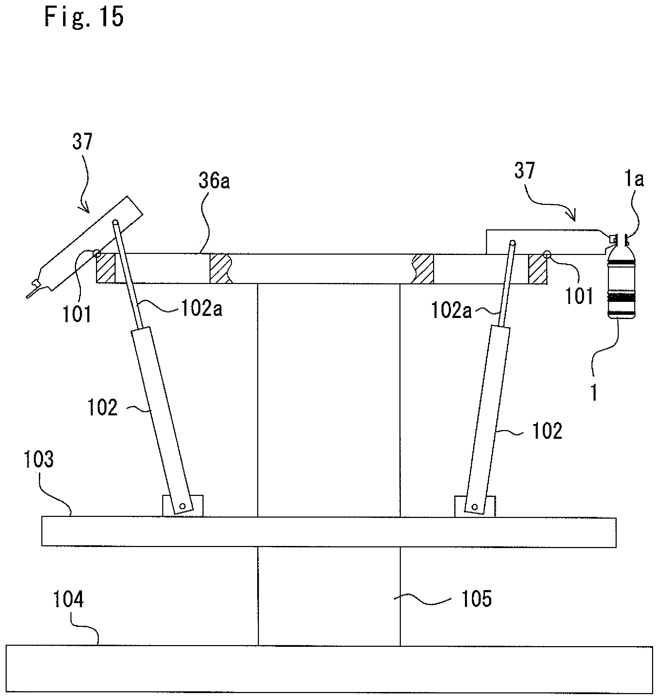

Furthermore, as the gripper interference prevention means, as shown in Fig. 15, there may be adopted a rotating mechanism which rotates the gripper 37 in the vertical direction of the wheel 36a. The gripper 37 is coupled to the wheel 36a to be vertically rotatable by means of hinge 101, and also coupled to the wheel 103 rotated integrally with the start end wheel 36a through a piston-cylinder assembly 101.

In a case when some abnormality occurs on the molding section 7 side and the turn table train and the wheel train on the molding section 7 side are emergently stopped, as shown in Fig. 15, the piston rod 102a of the piston-cylinder assembly 102 expands, and the gripper projecting along the radial direction of the wheel 36a is rotated downward with the hinge 101 being furculum. According to such motion, the interference between the gripper 38 mounted to the terminal end wheel 19b of the molding section 7 and the gripper 37 of the start end wheel 36a of the inspecting section 8 can be prevented from causing. In Fig. 15, reference numeral 104 designates a machine mount table supporting a turning shaft 105 of the wheels 36a and 103.

Further, in the embodiment described above, although the gripper 37 is downwardly rotated, the gripper 37 may be upwardly rotated, and in such case, it is also possible to prevent the interference.

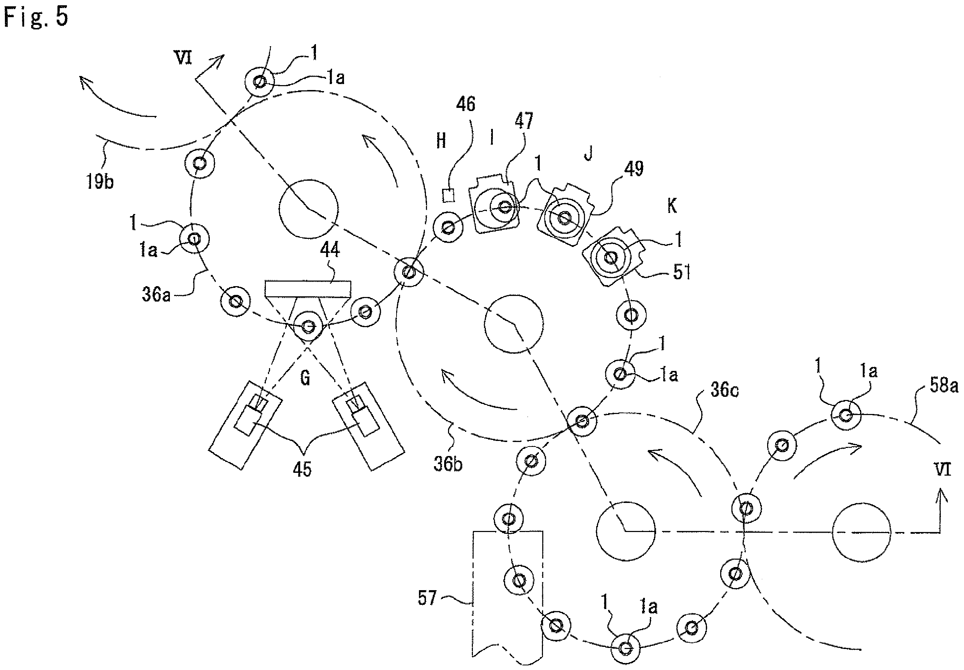

As shown in Fig. 3G and Fig. 5, inside the chamber 8a of the inspecting section 8, bottle body portion inspection means that judges quality (right and wrong) of the bottle by photographing the circular-cylindrical or rectangular-cylindrical body portion of the bottle 1 is disposed at predetermined positions around the start end wheel 36a. The bottle body inspection means includes a lamp 44 as illuminating means and a camera as photographing (imaging) means. Illuminating light from the lamp 44 penetrates the body portion of the bottle 1, and the camera 45 receives this penetrating illuminating light and photographing the body of the bottle 1. An image of the body of the bottle 1 is processed by a processing device, not shown, to thereby discriminate the presence or absence of abnormality such as injury, foreign material, color change or the like.

As shown in Figs. 3H, 3I, 3J, 3K, and Fig. 5, temperature inspection means; support ring inspection means; bottle neck portion top surface inspection means; and a bottle bottom inspection means are arranged along the intermediate wheel 36b disposed adjacent to the start end wheel 36a in the described order.

In the above arrangement, the temperature inspection means is for detecting the temperature of the bottle 1 to thereby judge the quality of bottle 1, and includes a temperature sensor 46. The support ring inspection means is for photographing the support ring 5 of the neck portion 1a of the bottle 1 to thereby judge the quality of the bottle 1, and includes a lamp 47 as illuminating means and a camera 48 as photographing means. The neck portion top surface inspection means is for photographing a ring shaped top surface 1d, which is to be flat and smooth surface, of the neck portion 1a of the bottle 1 to thereby judge the quality of the bottle , and includes a lamp 49 as illuminating means and a camera 50 as photographing means. The bottle bottom inspection means is for photographing the bottom of the bottle 1 to thereby judge the quality of the bottl1, and includes a lamp 51 as illuminating means and a camera 52 as photographing means.

Further, it may be possible to appropriately change the arrangement and the position of the respective inspection means described, and furthermore, some of them may be appropriately eliminated or other inspection means may be added as occasion demands for other inspections.

The temperature sensor 46 is composed of, for example, an infrared radiation thermometer, but another thermometer may be used. The temperature sensor 46 is disposed so as to oppose to each of the support ring 5 of the neck portion 1a and the bottom of the bottle 1 as shown in Fig. 3H.

The temperatures of the surfaces of the bottles 1 are detected by the temperature sensors 46 while travelling around the start end wheel 36a and the intermediate wheel 36b at a predetermined speed in the state of being held by the grippers 28 while keeping the residual heat in the molding section 7. Such residual heat is necessary, thereafter, for sterilizing appropriately the outer surface of the bottle 1 with hydrogen peroxide and the inner surface of the bottle 1 with hot water, and accordingly, it is desirable that the temperatures detected by the temperature sensor 46 is more than 50°C.

In a case where either one of the temperatures detected at two positions of the bottle 1 does not reach a predetermined temperature, the bottle 1 is judged to be defective. The predetermined temperature is in a range of 50°C to 80°C. That is, the bottle 1 hated to a temperature not reaching the predetermined temperature may be insufficiently sterilized when the outer surface of the bottle 1 is sterilized with the hydrogen peroxide and the inner surface thereof is sterilized with the hot water. On the contrary, in a case where both of the temperatures of the two portions of the bottle 1 reaches the predetermined temperature, it will be said that the outer and inner surfaces of the bottle 1 can be sufficiently sterilized in the supply of the hydrogen peroxide and hot water in the following processes.

Further, the arrangement of the temperature sensors 46 is not limited to those two positions, and the number of such sensors to be located may be added or reduced appropriately in accordance with the shape and size of the bottle 1, or kinds of molds in the molding process. For example, it may be possible to set the temperature sensor 46 only one portion of the above two portions of bottle 1 at which cold spot is liable to occur.

Furthermore, a temperature of a thin portion of the bottle 1 is liable to be lowered than a temperature of a thick portion thereof and the heat of the thin portion is liable to easily escape, so that it may be better to locate the temperature sensor 46 to a position opposing to a thin thickness portion of the body of the bottle 1, and according to such location, only the bottle 1 keeping residual heat minimal for the necessity for the sterilization in the subsequent process can be delivered to the bottle outer surface sterilizing section 9.

As shown in Fig. 3I and Fig. 5, the lamps 47 as the support ring inspection means are arranged in form of circle above the support ring 5 of the bottle neck portion 1a. More specifically, this configuration will be made by circularly arranging LEDs. The camera 48 is arranged so as to receive a light of the illumination light of the lamp 47 reflected on the upper surface of the support ring 5. The support ring 5 is photographed by the camera 48. At this time, the clamping pieces 28a and 28b of the gripper 28 hold the neck portion 1a of the bottle 1 at the lower portion of the support ring 5, the photographing operation to the support ring 5 is not obstructed by the location of the clamping pieces 28a and 28b. The support ring 5, particularly, the upper surface thereof, can be heavily inspected by the support ring inspection means.

The image of the support ring 5 photographed by the camera 48 is processed by an image processing device, not shown, to discriminate whether any injury or deformation is present or not. Further, since the support ring has a possibility to be touched by a buyer of the bottle 1 as a soft drink package when opening the bottle 1, the presence of injury or deformation is not desirable. A bottle formed with injury or deformation of an extent over allowance is judged to be defective product.

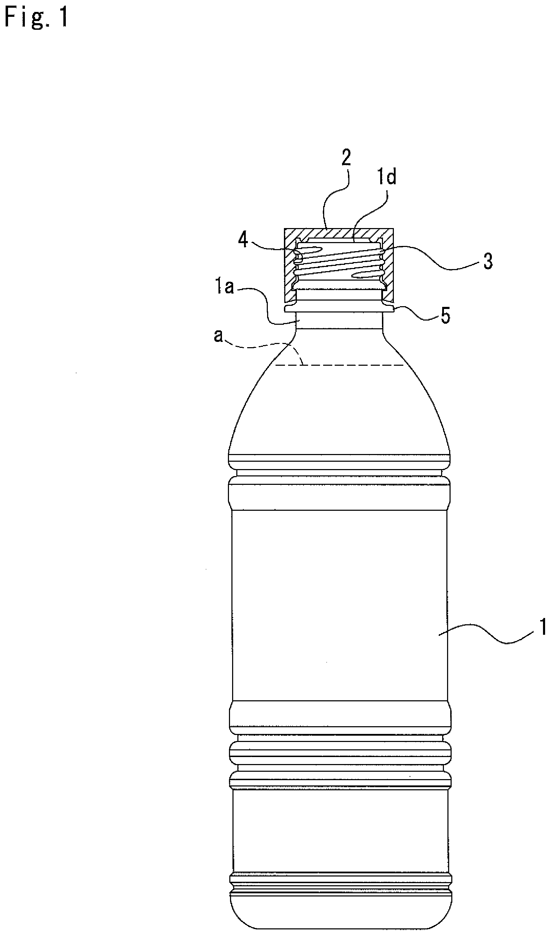

As shown in Fig. 3J and Fig. 5, the lamp 49 as the bottle neck portion top surface inspection means is provided, in an annular shape, above the top surface 1d of the bottle neck portion 1a, and more specifically, LEDs are annularly arranged. The camera 50 is arranged so as to receive the illumination light of the lamp 49 which is reflected by the top surface 1d, and the top surface 1d is photographed by this camera 50. An image of the top surface 1d thus photographed by the camera 50 is processed by an image processing device, not shown, and it is then discriminated whether abnormal state such as generation of injury, deformation or like is present or not. Since the top portion 1d of the bottle neck portion 1a is a portion against which the rear top portion of the cap abuts (refer to Fig. 1) to seal the bottle 1, it is necessary for the top portion 1d to be flat and smooth. Because of this reason, if any injury or deformation is formed to the bottle neck portion top portion 1d, such bottle is deemed to be defective.

As shown in Fig. 3K and Fig. 5, the lamp 51 as the bottle bottom inspection means is provided, in an annular shape, below the bottom of the bottle 1, and more specifically, LEDs are annularly arranged. The camera 52 is arranged above the bottle neck portion 1a so as to receive the illumination light of the lamp 51 and penetrating the bottom of the bottle 1 as transparent light. The bottom of the bottle 1 is photographed by this camera 52. An image of the bottle bottom thus photographed by the camera 52 is processed by an image processing device, not shown, and it is then discriminated whether abnormal state such as generation of injury, foreign material, deformation or like is present or not.

Further, though not shown, matte surface treatment is effected to the gripper 28 travelling in the inspecting section 8. According to this treatment, it becomes possible to prevent inspection miss due to reflections of the illumination lights from the respective lamps 47, 49 and 51 by the grippers 28 from causing. Further, although the chamber 8a of the inspection chamber 8 is provided with an inspection eye hole, not shown, a muffled glass is provided for the inspection eye hole so that light outside the chamber 8a dose not enter.

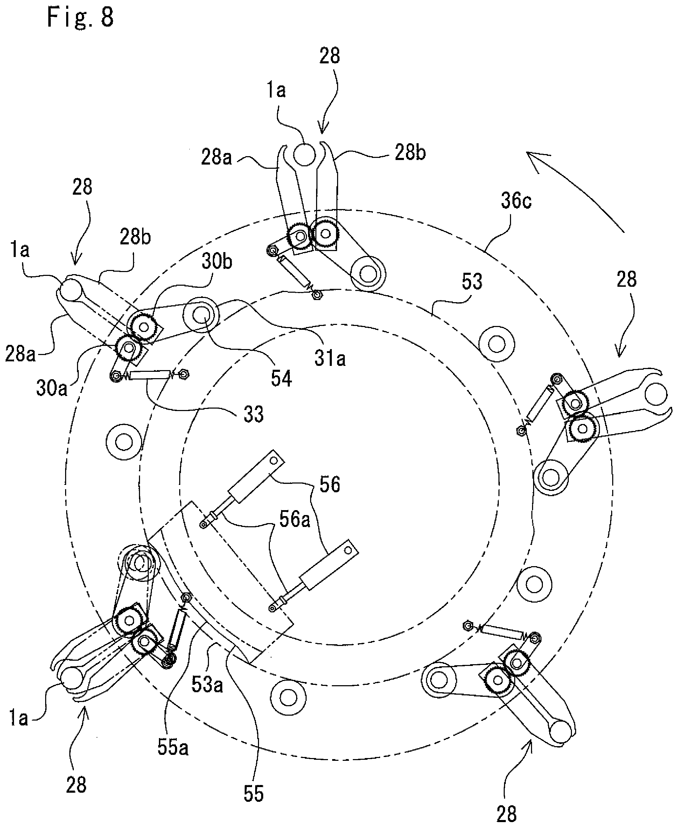

As shown in Fig. 8, the terminal end wheel 36c contacting the intermediate wheel 36c from the downstream side is provided with grippers 28 similar to those of the intermediate wheel 36b. When the terminal end wheel 36c is rotated, a pair of clamping pieces 28a and 28b of each of the grippers 28 are opened by sliding contact between the cam follower 31a and the cam 53, and then, the gripper 28 receives the neck portion 1a of the bottle 1 from the gripper 28 of the intermediate wheel 36b so as to clamp the bottle neck portion 1a by the clamping pieces 28a and 28b, to hold the bottle 1 in the suspended state, and to turn the clamped bottle 1 toward the bottle outer surface sterilizing section 9. When the bottle 1 reaches the bottle outer surface sterilizing section 9, a pair of the clamping pieces 28a and 28b are opened by the slid contacting motion between the cam follower 31a and the cam 53 to thereby transfer the bottle 1 to a wheel on the bottle outer surface sterilizing section 9. The cam 53 is fixed to a stationary frame, not shown, disposed inside the terminal end wheel 36c.

The terminal end wheel 36c is provided with removing (excluding) means for removing (excluding) a bottle 1 judged as defective one by the inspection in the inspecting section 8 from the travelling path.

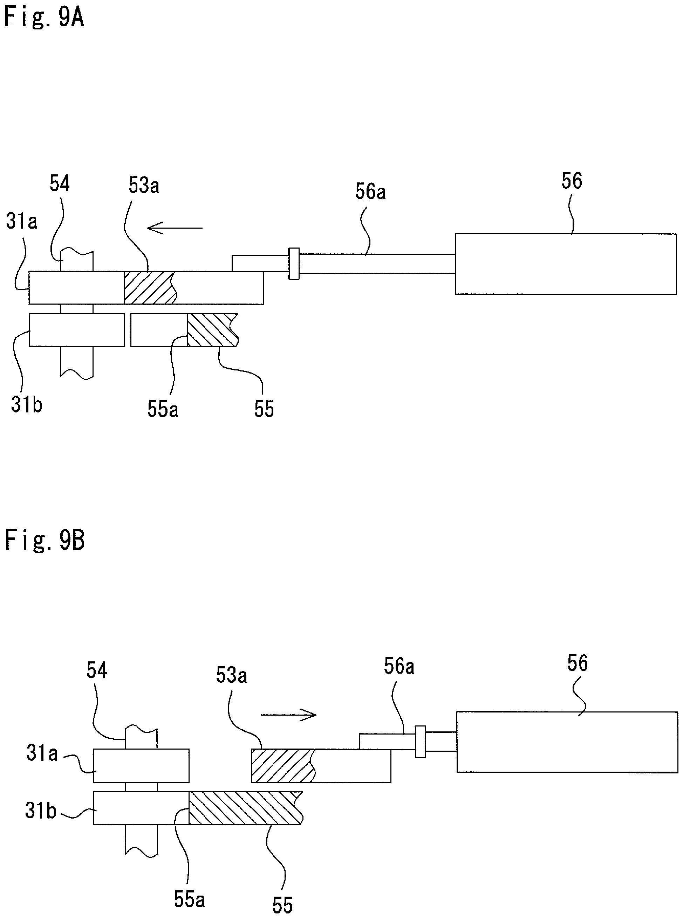

The removing means is provided with a gripper releasing mechanism such as shown in Figs. 8 and 9. The gripper releasing mechanism is provided with an additional cam follower 31b having a shape similar to that of the cam follower 31 a added to a pivot 53 of the cam follower 31a and an additional cam 55 having a shape partially different from the cam 53 and contacting the additional cam follower 31 b, the additional cam 55 being disposed below the cam 53. A part of the cam 53 formed as a separate portion as a movable cam portion 53a is also provided for the gripper releasing mechanism.

The movable cam 53a is inserted into a cut-off portion of the stationary cam 53 to be slidable in the radial direction, and is connected to a piston rod 56a of a piston-cylinder assembly 56 connected to a frame, not shown, in the interior of the terminal end wheel 36c. Further, a recessed portion 55a, into which the additional cam follower 31b is fitted, is formed to a portion of the additional cam 55 corresponding to the portion of the movable cam 53a.

In addition, the removing means is provided with a tubular shooter for removing a defective bottle denoted by reference numeral 57 in Figs. 2 and 5.

At a time when a signal representing the fact that the bottle 1 judged to be defective is transmitted from the inspecting section 8, the piston-cylinder assembly in the extending state as shown in Fig. 9A is contracted as shown in Fig. 9B to thereby retire the movable cam portion 53a inward in the radial direction of the cam 53. Because of such operation, the additional can follower 31b is intruded into the recessed portion 55a of the additional cam 55, the paired clamping pieces 28a and 28b of the gripper 28 are moved in the opening state shown with solid line from the closed state shown in two-dot-chain line, and the defective bottle 1 is then released. The defective bottle 1 falls down below the gripper 28 and then transferred to a predetermined collecting section by the shooter 57. On the other hand, the good bottle 1 is moved toward the bottle outer surface sterilizing section 9 through passing the removing portion of the removing means without being stopped.

As shown in Fig. 2, the bottle outer surface sterilizing section 9 of the bottles 1 is coupled to the inspecting section 8 of the bottles 1. The bottle outer surface sterilizing section 9 is also entirely covered by the chamber 9a.

Inside the chamber 9a of the bottle outer surface sterilizing section 9, as shown in Fig. 2, the wheel train to be coupled to the terminal end wheel 36c as the travelling means of the bottle 1 on the inspecting section side is coupled. More specifically, this wheel train is composed of three wheels 58a, 58b and 58c, and a bottle travelling path is provided around the outer periphery of these wheels. Grippers 28 substantially identical to those 28 shown in Fig. 4 are provided around the respective wheels 58a, 58b and 58c.

The respective grippers 28 transfer the bottles 1 from the start end wheel 58a to the terminal end wheel 58c while turning around the respective wheels 58a to 58c with the neck portions 1a of the bottles 1 being held, respectively. According to such operation, the good bottles 1 after the inspection are continuously travelled on the travelling path from the terminal end wheel 36c of the inspecting section 8 to the terminal end wheel 58c of the bottle outer surface sterilizing section 9. During the traveling, the neck portion 1a of the bottle 1 is held by the clamping pieces 28a and 28b of each of the grippers 28, so that the bottles 1 are travelled in the upright suspended (i.e., elected) state.

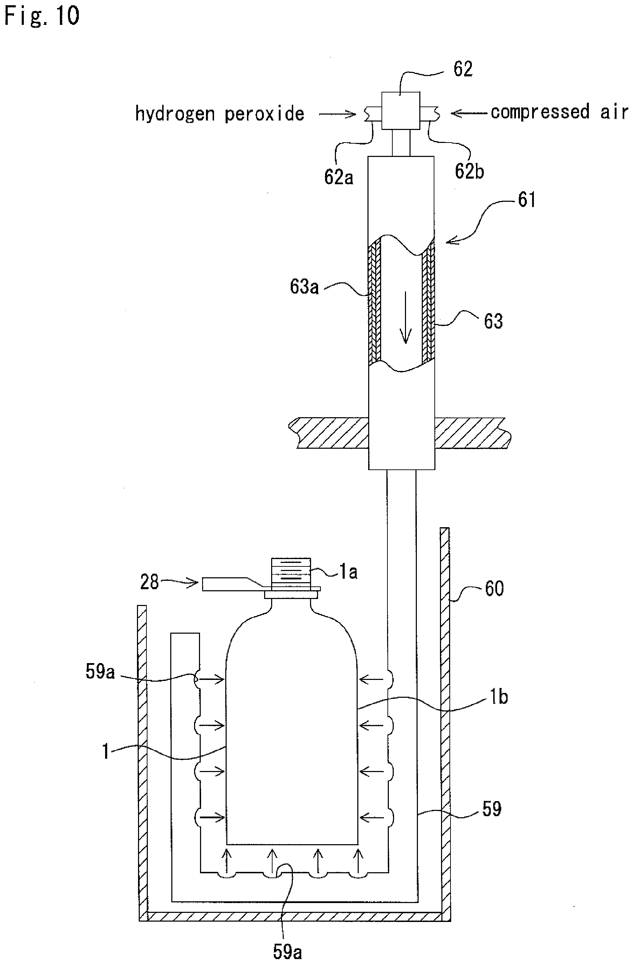

A spray nozzle pipe 59 and a gutter 60 are provided as hydrogen peroxide supply means for supplying condensed mist α of hydrogen peroxide as a sterilizing agent to the outer surface of the bottle 1 at a predetermined position, as shown in Fig. 3L and Fig. 10, around the intermediate wheel 58b contacting the start end wheel 58a from the downstream side inside the chamber 9a of the bottle outer surface sterilizing section 9. The spray nozzle pipe 59 is bent in approximately an L-shape so as to surround the body 1b and the bottom of the bottle 1 passing through one portion around the intermediate wheel 58b.

A plurality of small holes 59a for jetting the condensed mist α of the hydrogen peroxide are perforated at portions corresponding to the body portion and the bottom portion of the bottle 1. In order to flow out of the hydrogen peroxide into the bottle 1, the small holes 59a are formed to positions apart from the neck portion 1a of the bottle 1.

The gutter 60 is arranged so as to extend by a predetermined distance along the bottle travelling path around the intermediate wheel 58b so as to surround the bottles 1 and the spray nozzle pipe 59.

One or a plurality of spray nozzle pipes 59 may be arranged, and in the case of arranging the plural spray nozzle pipes 59, they will be arranged around the intermediate wheel 58b.

Further, in the illustrated example, although the spray nozzle pipe 59 and the gutter 60 are arranged around the intermediate wheel 58b, they may be arranged around the other wheel.

The condensed mist α of the hydrogen peroxide is generated by condensing heated hydrogen peroxide sprayed by a mist generating device 61 shown in Fig. 10.

The mist generating device 61 is provided with a hydrogen peroxide supply unit 62 as two-fluid spray for supplying drops of solution of the hydrogen peroxide as sterilizing agent, and an evaporation unit 63 for heating and evaporating sprayed hydrogen peroxide supplied from the hydrogen peroxide supply unit 62 to a temperature more than a boiling point thereof and less than an unresolved temperature.

The hydrogen peroxide supply unit 62 acts to spray hydrogen peroxide solution into the evaporation unit 63 by introducing the hydrogen peroxide solution and the compressed air through hydrogen peroxide supply passage 62a and a compressed air supply passage 62b, respectively.

The evaporation unit 63 is composed of a pipe with a heater 63a being interposed between inner and outer wall portions, and the spray of the hydrogen peroxide blasted into the pipe is heated and then evaporated. The evaporated hydrogen peroxide gas is injected as condensed mist α toward the bottom and body portion 1b of the bottle 1 through a number of small holes 59a.

The bottles 1 are delivered around the intermediate wheel 58b with the neck portion 1a of the bottle 1 being directed upward, and a number of small holes 59a of the spray nozzle pipe 59 are formed so as to oppose to the body portions 1b and the bottom portions of the bottle 1 inside the gutter 60 during the travelling of the bottles 1.

The condensed mist α of the hydrogen peroxide is blasted continuously to the body portions 1a and the bottom portion of the bottles 1, except the neck portions 1a, and the blasted hydrogen peroxide condensed mist α sterilizes the outer surfaces of the bottles without entering the inside of the travelling bottles 1. During this operation, since the bottles 1 are delivered inside the gutter 60, the condensed mist α can fully contact the outer surfaces of the bottles 1.

In this operation, it is desirable that the supply amount of the condensed mist α of the hydrogen peroxide is 10 µ L to 30 µ L per one bottle 1 having inner volume of 500cc. This supply amount is about 50% in comparison with a conventional case of a bottle having a normal temperature having no residual heat.

Each of the grippers 28 travelling from the start end wheel 36a in the inspecting section 8 to the terminal end wheel 58c of the bottle outer surface sterilizing section 9 is controlled in its travelling speed so as to keep the heat remaining to the bottle 1 at the bottle molding process in the molding section 7 till the time at least necessary for the sterilization of the outer surface of the bottle 1 in the bottle outer surface sterilizing section 9 and the sterilization of the inner surface of the bottle 1 at the hot water rinsing section 91.

That is, as shown in Fig. 2, the inspecting section 8 is provided with a servomotor S1 for driving all the wheels 36a, 36b and 36c in the inspecting section 8 so as to be dynamically cooperated. Similarly, the bottle outer surface sterilizing section 9 and the hot water rising section 91 are also provided with servomotors S2 and S3 for driving all the wheels 58a, 58b, 58c and 92a, 92b, 92c so as to be dynamically cooperated, respectively.

According to the controlling of the servomotors S1, S2 and S3, the travelling speed of the bottles 1 are regulated, and as a result, the bottle 1 held by the gripper 28 reaches the position of the spray nozzle pipe 59 with the heat remaining to the bottles 1 at the molding process being kept necessary for the sterilization in the bottle outer surface sterilizing section 9, and in addition, the bottle 1 reaches the hot water rinsing section 91 with the heat remaining to the bottles 1 being kept at least necessary for the sterilization of the inner surface of the bottle 1 in the hot water rinsing treatment in the succeeding hot water rinsing section 91.

It is desirable that the temperature of the bottle 1 at the location of the spray nozzle pipe 59 is kept more than 50 °C. In the state of keeping the temperature more than 50 °C, the sterilizing effect by the hydrogen peroxide condensed mist α can be fairly achieved to the outer surface of the bottle 1. Since the bottle 1 immediately after the molding process is in a high-temperature state, high sterilizing effect can be achieved even with a small amount of the condensed mist α.

That is, in the experiment made by the inventors of the subject application, the concentration of the hydrogen peroxide condensed on the surface of the bottle 1 becomes higher as the temperature of the bottle 1 becomes higher. This matter is assumed to be caused by the reason such that the hydrogen peroxide has a boiling point higher than that of water. More specifically, in the cases of the bottle temperature of 50°C, 65°C, and 80°C, the concentration of the hydrogen peroxide adhering to the outer surface of the bottle 1 is about 70%, about 80%, and about 90% in weight %, respectively. From the fact that the hydrogen peroxide concentration adhering to the surface of fungus body becomes high, the outer surface of the bottle 1 can be sterilized with a small amount of the hydrogen peroxide.

The soft drink filling apparatus of the present embodiment is further provided with positive pressure creating means for creating positive pressure in the inspecting section 8 more than in the molding section and the bottle outer surface sterilizing section 9.

That is, as shown in Fig. 11, an atmosphere shut-off chamber 79 is disposed between the chamber 8a of the inspecting section 8 and the chamber 9a of the bottle outer surface sterilizing section 9. In addition, a partition wall 35, provided with an opened bottle passing port 35a, is disposed between the chamber 7a of the molding section 7 and the chamber 8a of the inspecting section 8, and partition walls 80 and 81 similar to the partition wall 35 are also disposed between the chamber 8a of the inspecting section 8 and the chamber 9a of the bottle outer surface sterilizing section 9 and between the atmosphere shut-off chamber 79 and the chamber 9a of the bottle outer surface sterilizing section 9, respectively.

Furthermore, a similar partition wall 82 is also provided between the chamber 9a of the bottle outer surface sterilizing section 9 and the chamber 91a of the hot water rinsing section 91 so as to partition a portion to which the hydrogen peroxide condensed mist α is sprayed through the spray nozzle pipe 59 from the hot water rinsing section 91.

An air supply duct 83 is connected to the chamber 8a of the inspecting section 8 as air supply means for supplying cleaned air into the chamber 8a thereof, and an air supply blower 84, a filter 85 and a heater 97 are provided for the air supply duct 83. Air is heated by the heater 97, and the heated air contacts the bottle 1 travelling inside the chamber 8a, so that the bottle 1 is prevented from cooling or is further heated. If the residual heat of the bottle after the molding process is of an extent not to influence the sterilizing effect in the bottle outer surface sterilizing section 9, the heating process by the heater 97 may be eliminated.

By the blowing of the cleaned air into the chamber 8a of the inspecting section 8 by the air supply means, pressure inside the chamber 8a of the inspecting section 8 is made positive to a pressure higher than atmospheric pressure such as, for example, 3Pa.

The atmosphere shut-off chamber 79 is provided with exhaust means including an exhaust duct 86 connected to the chamber 79 and an exhaust blower 87 and a filter 88 are provided for the exhaust duct 86. An exhaust duct 89 may be further disposed as occasion demands to a portion adjacent to the atmosphere shut-off chamber 79 in the chamber 9a of the bottle outer surface sterilizing section 9. This exhaust duct 89 is connected to the exhaust duct 86 connected to the atmosphere shut-off chamber 79. According to the exhausting operation by the exhaust means, pressure inside the atmosphere shut-off chamber 79 is maintained to the pressure substantially the same as that, i.e., 0Pa, of the atmospheric pressure.

Furthermore, though not shown, there is provided cleaned air supply means in a chamber 10a of a filling section 10, mentioned hereinafter, the cleaned air supply means including an air supply duct connected to the chamber 10a of the filling section 10, and an air supply blower and a filter are provided for the air supply duct. By the provision of such air supply means, the cleaned air is blasted into the chamber 10a of the filling section 10 under about 20 to 100Ps. This air flows into the chamber 9a of the bottle outer surface sterilizing section 9 through the chamber 91a of the hot water rinsing section 91, then is changed to have a positive pressure of about 10Pa, and thereafter, flows outside of the chambers 9a and 79 of the duct 89 of the chamber 9a of the bottle outer surface sterilizing section 9 and the exhaust duct 86 of the atmosphere shut-off chamber 79.

Furthermore, the pressure in the interior of the chamber 7a of the molding section 7 is maintained to be approximately 0Pa as like as the atmospheric pressure. In addition, an air nozzle 90 is provided, as occasion demands, for the bottle passing hole 81a of the partition wall 81 between the atmosphere shut-off chamber 79 and the chamber 9a of the bottle outer surface sterilizing section 9 to thereby shut off the bottle passing hole 81a by an air curtain.

As described above, the hydrogen peroxide mist α and gas β flowing into the chamber 9a of the bottle outer surface sterilizing section 9 are exhausted outside the chamber 9a by the operation of such positive pressure creating means, and the cleaned air flowed into the chamber 8a of the inspecting section 8 then flows toward the chamber 7a of the molding section 7 and the atmosphere shut-off chamber 79, thereby blocking the flow-in of the contaminated air or air containing hydrogen peroxide into the chamber 8a of the inspecting section 8.

Further, even if the air is pulled into the chamber 8a of the inspecting section 8 from the chamber 7a of the molding section 7 according to the travelling of the bottles 1, this air is blocked from entering the chamber 9a of the bottle outer surface sterilizing section 9 by the exhaust air from the atmosphere shut-off chamber 79, so that the interior of the bottle outer surface sterilizing section 9 can be properly prevented from being contaminated.

As shown in Fig. 2, the hot water rinsing section 91 is coupled to the bottle outer surface sterilizing section 9, and the hot water rinsing section 91 is also entirely covered with a chamber 91a. A partition wall, not shown, is provided between the hot water rinsing section 91 and the chamber 9a of the bottle outer surface sterilizing section 9, and a bottle passing hole through which the bottle 1 passes is formed to the partition wall.

To the inside of the chamber 91a of the hot water rinsing section 91, a wheel train is continuously coupled to the terminal end wheel 58c as the bottle travelling means on the side of the bottle outer surface sterilizing section 9. More specifically, this wheel train includes three wheels 92a, 92b and 92c, around which a bottle travelling path is formed.

Furthermore, grippers 28 similar to those 28 shown in Fig. 4 are arranged around the start end wheel 92a and the terminal end wheel 92c.

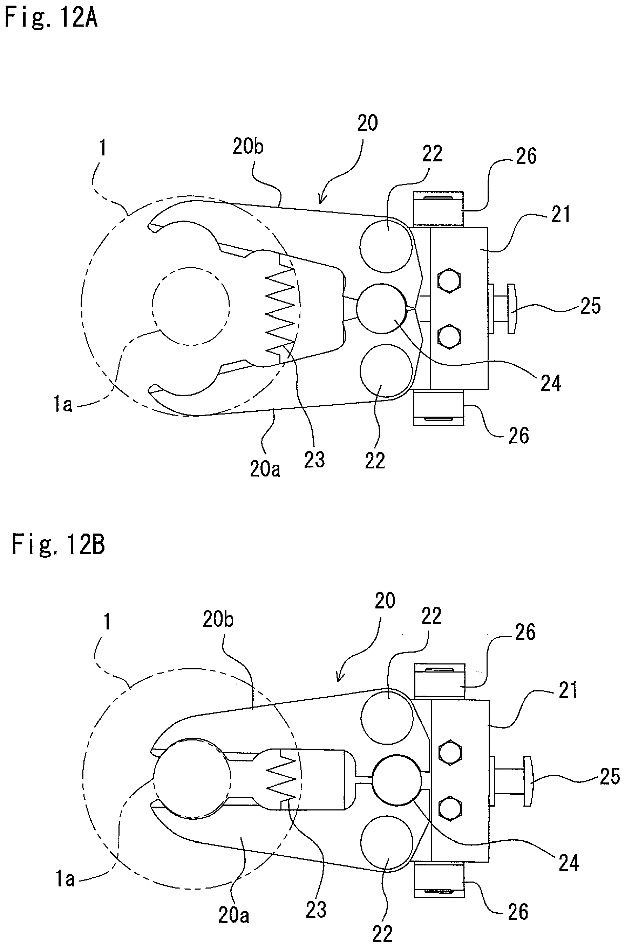

A number of grippers 20 shown in Figs. 12A and 12B are disposed with constant pitch around an intermediate wheel 92b having a large diameter.

Each of the grippers 20 is provided with a pair of clamping pieces 20a and 20b which clamp the neck portion 1a of the bottle 1 from the outer side thereof. The paired clamping pieces 20a and 20b are supported by a base portion 21 to be pivotal by means of vertical pins 22, respectively, and are always pulled in the closing direction thereof by a tension spring 23. According to this structure, the pair of clamping pieces 20a and 20b tends to always clamp the neck portion 1a of the bottle 1 as shown in Fig. 12B. To the base portion 21, a columnar vertical shaft pin 24 is mounted so as to be engaged with root portions of both the clamping pieces 20a and 20b and to be slidable in the radial direction of the intermediate wheel 92b. The follower cam 25 connected to the vertical shaft pin 24 is also provided to be also slidable in the radial direction of the intermediate wheel 92b.

Inside the intermediate wheel 92b, there is provided a cam, not shown, which is engaged with the cam follower 25, makes the cam follower 25 and the vertical shaft pin 24 slide at a predetermined position in the radial direction of the intermediate wheel 92b, and switches the clamping pieces 20a and 20b of the gripper 20 from (to) the opened state to (from) closed state.

When the intermediate wheel 92b rotates so that the gripper 20 faces the bottle 1 held by the gripper 28 of the intermediate wheel 92b, the clamping pieces 20a and 20b clamp the neck portion 1a of the bottle 1 at the portion lower than the support ring 5, and the bottle 1 is then delivered in the suspended state.

Furthermore, the gripper 20 is also provided with horizontal pivots 26, as shown in Figs. 12A and 12B, so as to project circumferential direction of the intermediate wheel 92b, and is supported to the intermediate wheel 92b through the horizontal pivots 26.

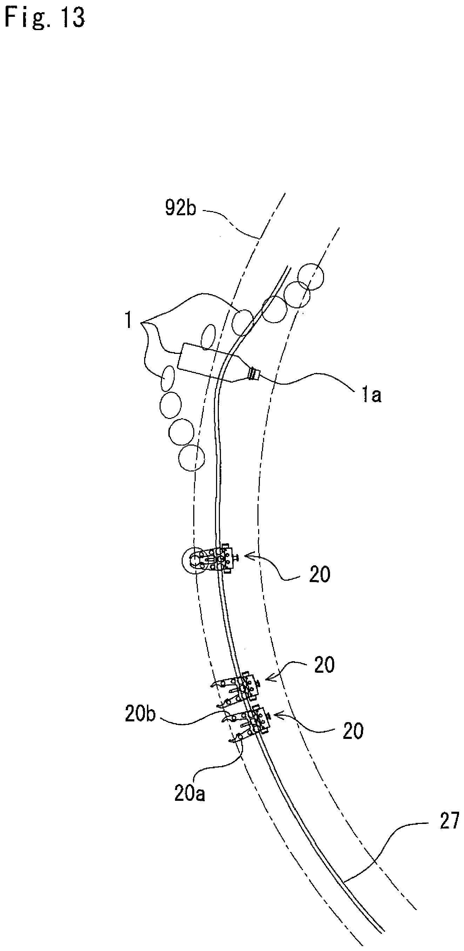

Further, as shown in Fig. 13, a cam 27 bent in a circular-arc shape around a turning axis of the intermediate wheel 92b is provided so that the respective grippers 20 contact this cam 27. When the grippers 20 receive the bottles 1 by the turning motion of the intermediate wheel 92b and then are turned, the grippers 20 are inverted in vertical attitude together with the bottles 1 with the horizontal pivots being furculum under the guidance of the cam 27. According to such motion, the bottle 1 is also inverted in the vertical state as shown in Fig. 3M in which the bottle neck portion 1a directed downward.

During the time when the bottle 1 is travelled in the hot water rinsing section 91 in the inverted attitude, as shown in Fig. 3M, by the gripper 20 of the intermediate wheel 92b, a hot water nozzle 93 is inserted into the bottle 1 from the neck portion 1a thereof and aseptic hot water "w" is jetted into the bottle 1. The hot water "w" contacts and heats the entire inner surface of the bottle 1 and then flows out of the bottle 1 through the neck portion 1a. As a hot water nozzle 93, a usual rinser (rinsing) nozzle may be used. The hot water "w" is sprayed into the bottle 1 by means of hot water nozzle.

In the hot water rinsing section 91, hot water of the temperature preferably of 70 °C to 80°C is supplied into the bottle 1 during the time when heat applied to the preform 6 remains on the bottle 1, and by making the hot water of 0.1 my to 0.2mL per 1cm² (0.1-0.2mL/1cm²) contact to the entire inner surface of the bottle 1 to thereby sterilize the inner surface of the bottle 1.

Further, the temperature of the hot water "w" is further preferably of 70 °C to 75°C.

As mentioned above, since the heat applied to the preform remains the bottle 1, the inner surface of the bottle 1 can be appropriately sterilized by making the hot water "w" contact to the inner surface of the bottle 1 for an extremely short time without causing any shrinkage or deformation of the bottle 1.

Furthermore, as shown in Fig. 3L, in the bottle outer surface sterilizing section 9, the hydrogen peroxide adheres to the outer surface of the bottle 1. However, by supplying the hot water "w" in the interior of the bottle 1, the hot water "w" flowing on and along the outer surface of the bottle 1 is heated by the heat of the adhering hydrogen peroxide, thus enhancing the sterilizing effect to the outer surface of the bottle 1.

After the sterilization and cleaning of the interior of the bottle 1 by supplying the hot water "w", the bottle 1 is returned in its attitude to the electing attitude by the gripper 20 of the intermediate wheel 92b, then received by the gripper 28 of the terminal end wheel 92c, and thereafter, delivered to the subsequent filling section 10.

As shown in Fig. 2, the filling section 10 is connected to the hot water rinsing section 91.

The filling section 10 is also entirely covered with a chamber 10a. A partition wall, not shown, is disposed between the filling section 10 and the chamber 91a of the hot water rinsing section 91, and a bottle passing hole is formed to the partition wall.

As shown in Fig. 2, a wheel train to be connected to the terminal end wheel 92c as the travelling means of the bottle 1 on the hot water rinsing section side is connected to the inside the chamber 10a of the filling section 10.

More specifically, this wheel train is composed of six wheels 94a, 94b, 94c, 94d, 94e and 94f, around which a bottle travelling path is provided. In addition, grippers 28 similar to those 28 shown in Fig. 4 are provided around each of the wheels 94a, 94b, 94c, 94d, 94e and 94f.

Inside the chamber 10a of the filling section 10, each of the grippers 28 transfers the bottle 1 from the start end wheel 94a to the terminal end wheel 94f while turning around each of the 94a, 94b, 94c, 94d, 94e and 94f with the neck portion 1a of the bottle 1 being gripped thereby. According to such motion, the bottles 1 are continuously travelled from the start end wheel 94a to the terminal end wheel 94f within the filling section 10. During such traveling, each of the grippers 28 grips the neck portion 1a of the bottle 1 by the paired clamping pieces 28a and 28b, and hence, the bottle 1 travels in the suspended electing attitude.

Inside the chamber 10a of the filling section 10, the intermediate wheel 94c is formed as a large diameter wheel, and a filling machine is disposed to a predetermined position around the intermediate wheel 94c. As shown in Fig. 3N, soft drink "w" preliminarily subjected to the sterilizing treatment fills the bottle 1 through a nozzle 95 provided for the filling machine. This nozzle 95 is moved synchronously with the bottle 1, and during such movement, a constant amount of soft drink fills the bottle 1.

Furthermore, a capper is disposed to a predetermined position around the intermediate wheel 94e on the downstream side of the filling machine. As shown in Fig. 3O, the cap 2 is applied by the capper to the neck portion 1a of the bottle 1 to thereby seal the bottle 1.

The bottle 1 into which the soft drink is filled and then sealed with the cap 2 is released from the gripper 28 of the terminal end wheel 94f and discharged outward of the filling device through an outlet of the chamber 10a.

Since the filling machine and the capper are per se known ones, the details thereof are omitted herein.

Moreover, as shown in Fig. 2, three servomotors S4, S5 and S6 are arranged inside the filling section 10 so as to drive the respective wheels 94a, 94b, 94c, 94d, 94e and 94f in predetermined dynamically association with the servomotors. Among these servomotors, the first servomotor S4 drives the start end wheel 94a, the second servomotor S5 drives the intermediate wheel 94c to which the filling machine is provided, and the third servomotor S6 drives the wheels 94d, 94e and 94f arranged downstream side of the intermediate wheel 94c provided with the filling machine.

According to the arrangement described above, even if the wheels and/or grippers in the inspecting section 8, the bottle outer surface sterilizing section 9, the hot water rising section 91 and the filling section 10 have different structures from each other, it becomes possible to synchronously drive the respective grippers under the controls of the servomotors S1, S2, S3, S4, S5 and S6 and to thereby continuously smoothly travel or deliver the bottles 1 from the molding section 7 to the soft drink filling section 10.

Further, it is to be noted that, in the described embodiment, although the molding section 7 is driven by a not-shown usual electric motor, the wheel and the turn table of the molding section 7 may be driven by a servomotor.

Hereunder, operations and functions of the filling device for the soft drink described above will be explained.
(1) First, a preform 6 such as shown in Fig. 3A is prepared. The preform 6 is introduced into the preform supplying machine 11 of the soft drink filling apparatus after the molding by an injection molding machine, not shown.
   The preform 6 is supplied into the molding section by means of the conveyer 12 of the preform supplying machine 11.
(2) The preform 6 delivered by the conveyer 12 in the electing attitude as shown in Fig. 3A is received by the gripper of the start end wheel 13a which is continuously turned in the molding section 7, and then, turned to the inverted attitude by the gripper of the intermediate wheel 13b.
   The inverted preform 6 is applied to the mandrel 17 of the first turn table 14a from the neck portion 1a of the preform 6 as shown in Fig. 3B.
   The mandrels 17 applied with the preforms 6 travel inside the heating chamber 16 while rotating as shown in Fig. 3C, and hence, the preforms 6 are also continuously travelled inside the heating chamber 16 while rotating together with the mandrels, respectively. Thus, the preforms 6 are evenly heated to a temperature capable of being blow-molded.
(3) The heated preform 6 is clamped by the mold 18 for the blow-molding as shown in Fig. 3D and air is then blasted from the blow nozzle 19 penetrating the mandrel 17, thus molding the bottle 1 in the mold 18.
   The molded bottle 1 is taken out from the mold 18 together with the mandrel 17 by opening the mold 18, and as shown in Fig. 3E, the bottle 1 is delivered toward the first turn table 14a through the sixth turn table 14f in the inverted attitude.
(4) The bottle 1 held by the mandrel 17 in the first turn table 14a is then gripped by the gripping member 98 of the start end wheel 19a and turned so as to take the elected attitude as shown in Fig. 3F. At this time, the gripping member 98 grips a portion above the support ring 5 of the neck portion 1a of the bottle 1. Subsequently, the bottle 1 is received by the gripper 28 shown in Fig. 4 of the terminal end wheel 19b. At this time, the gripper 28 grips a portion lower than the support ring 5 of the neck portion 1a of the bottle 1 as shown in Fig. 6.
(5) The gripper 37 of the start end wheel 36a of the inspecting section 8 grips a portion above the support ring 5 of the neck portion 1a of the bottle 1 and then receives the bottle 1. The bottle 1 turns while being gripped by the gripper 37.
   During such turning motion, the body portion of the bottle 1 is inspected by the bottle body portion inspection means as shown in Fig. 3G. An image of the bottle body portion photographed by the camera 45 during the inspection is processed by an image processing device, not shown, and it is discriminated whether or not any abnormality such as injury, foreign material, deformation or the like is present.
(6) The bottle 1 is then transferred from the gripper 37 of the start end wheel 36a to the gripper 28 of the intermediate wheel 36b, and as shown in Fig. 3H and Fig. 6, the portion lower than the support ring 5 of the neck portion 1a of the bottle 1 is gripped by the gripper 28 of the intermediate wheel 36b, and under this state, the bottle 1 is turned.
   During the turning motion of the bottle 1, the temperature of the bottle 1 is detected by the temperature sensor 46 of the temperature inspection means as shown in Fig. 3H. In this stage, the temperature of the bottle 1 is preferably of 50 °C to 80 °C. In this stage, when the temperature detected by the temperature sensor 46 does not reach 50 °C, for example, such bottle 1 is determined to be defective one.
(7) Subsequently, as shown in Fig. 3I, the surface condition of the support ring 5 of the bottle 1 by the support ring inspection means. In this inspection, an image of the upper surface of the support ring 5 photographed by the camera 48 is processed by an image processor, not shown, to thereby discriminate whether any injury, foreign material, deformation or like is present or not.
(8) Subsequent to the support ring inspection process, as shown in Fig. 3J, the surface condition of the top surface 1d of the bottle neck portion 1a is inspected by bottle neck portion top surface inspection means. In this inspection, an image of the top surface 1d of the bottle neck portion 1a photographed by the camera 50 is processed by an image processor, not shown, to thereby discriminate whether any injury, foreign material, deformation or like is present or not.
(9) Subsequent to the bottle neck portion top surface inspection, as shown in Fig. 3K, the bottom of the bottle 1 is inspected by bottle bottom portion inspection means. In this inspection, an image of the bottom portion photographed by the camera 52 is processed by an image processor, not shown, to thereby discriminate whether any injury, foreign material, deformation or like is present or not.
(10) The bottle 1 which has been subjected to the respective inspections mentioned above is held by the gripper 28 of the terminal end wheel 36c of the inspecting section 8. At a time when a signal representing an abnormal state is generated by any one of the above inspection means, the gripper releasing mechanism is operated as shown in Fig. 9, and a pair of clamping pieces 28a and 28b move from the closed state shown with two-dot-chain line to the opened state shown with solid line, thereby releasing a defective bottle 1.
   According to such operation, the defective bottles 1 to which injury, foreign material, deformation or like is generated to or on the body portion, bottom portion, neck portion top surface 1d and support ring 5 of the bottle 1 are rejected from the bottle travelling paths, and in addition, the bottles 1 having temperatures by which desirable sterilization effect could not be obtained in the bottle outer surface sterilization process by the hydrogen peroxide and in the bottle inner surface sterilization process by the hot water rinsing are also rejected from the bottle travelling paths.
   On the other hand, as to the bottles 1 discriminated to be good, since the movable cam 53a is held to the position shown Fig. 9A, the good bottles 1 pass through the removing means and travel toward the bottle outer surface sterilizing section 9.
(11) The good bottle 1 is transferred to the gripper 28 of the start end wheel 58a of the bottle outer surface sterilizing section 9 from the gripper 28 of the terminal end wheel 36c of the inspecting section 89, and subsequently, the good bottles 1 are transferred to the grippers 28 of the downstream side wheels and continuously travelled.
   During the time when the good bottle 1 is travelled around the intermediate wheel 58b while being held by the gripper 28, the good bottle 1 passes through the portion of the spray nozzle pipe 59 as shown in Fig. 3L, and at this time, the hydrogen peroxide condensed mist a discharged from the small holes of the spray nozzle pipe 59 is blasted toward the outer surface of the bottle 1, thereby sterilizing the outer surface of the good bottle 1.
   As described above, since only the good bottles 1 maintained with an appropriate remaining heat are travelled to the spray nozzle pipe 59, the outer surfaces of the good bottles 1 are suitably sterilized by the hydrogen peroxide condensed mist a, and thereafter, delivered to the downstream side.
(12) As shown in Fig. 11, the positive pressure creating means is disposed to the travelling path of the bottle 1 from the molding section 7 to the bottle outer surface sterilizing section 9 through the inspecting section 8. According to the location of such positive pressure creating means, excess amount of the hydrogen peroxide condensed mist a flowing into the chamber 9a of the bottle outer surface sterilizing section 9 is discharged outside the chamber 9a through the discharge ducts 86 and 89, and on the other hand, the cleaned air flowing into the chamber 8a of the inspecting section 8 then flows toward the chamber 7a of the molding section 7 and the atmosphere shut-off chamber 79, thereby blocking the air including contaminated air and hydrogen peroxide from flowing into the chamber 8a of the inspecting section 8.
   Further, even if the air is drawn into the chamber 8a of the inspecting section 8 from the chamber 7a of the molding section 7 according to the travelling motion of the bottles 1, this air is blocked from entering into the chamber 9a of the bottle outer surface sterilizing section 9 by the exhaust from the atmosphere shut-off chamber 79, so that the interior of the bottle outer surface sterilizing section 9 can be suitably prevented from being contaminated.
(13) During the time when the bottle 1 is delivered downward of the bottle outer surface sterilizing section 9 through the inspecting section 8, if a certain abnormal event occurs on the molding section side and the wheel train on the molding section side is emergently stopped, as shown in Fig. 7, the piston rod 42a of the piston-cylinder assembly 42 is contracted, and a pair of clamping pieces 37a and 37b now under the closed state are opened widely to about 180 degrees as shown in Fig. 7.
   According to this motion, the interference between the gripper 28 mounted to the terminal end wheel 19b of the molding section side and the gripper 37 of the start end wheel 36a of the inspecting section side can be prevented.
   Further, since the start end wheel 36a and the subsequent wheels of the wheel trains are continuously rotated, the bottles 1 introduced into the inspecting section 8 are continuously travelled in the downstream direction. Accordingly, the normally molded bottles 1 are subjected to the inspection in the inspecting section 8, and the bottles 1 passing through the inspecting section 8 travel toward the bottle outer surface sterilizing section 9 to thereby prevent unnecessary treatment for the bottles 1 from being subjected to.
   Furthermore, even if the operation of the molding section 7 is stopped, it is possible to drive the inspecting section 8 and the subsequent sections, so that the bottles 1 can be continuously travelled on the downstream side of the bottle outer surface sterilizing section 9, and excessive adhesion of the hydrogen peroxide by the stopping of the bottles inside the bottle outer surface sterilizing section 9 and the defective sterilization due to the cooling of the bottles 1 can be prevented. Moreover, The deformation or like of the bottles 1 by the excessive heating in the hot water rinsing section 91 can be also prevented. Thus, only the properly processed bottles are filled up with soft drink "a".
(14) The bottle 1 to the outer surface of which the hydrogen peroxide condensed mist a is blasted is delivered into the hot water rinsing section 91 from the gripper 28 of the terminal end wheel 58c of the bottle outer surface sterilizing section 9 and is then travelled around the wheels 92a, 92b and 92c in the hot water rinsing section 91 from the upstream side to the downstream side thereof. The bottle 1 is vertically inverted by the gripper 20 of the intermediate wheel 92b, and as shown in Fig. 3M, the interior of the bottle 1 can be sterilized and cleaned for a short time by the aseptic hot water "w".
   In this state, the heat at the time of heating the preform remains on the bottle 1. Then, as mentioned hereinbefore, the hot water of the temperature of 70 °C to 80°C is supplied into the bottle 1, and by making the hot water "w" of 0.1mL to 0.2mL per 1 cm² contact to the entire inner surface of the bottle 1, the inner surface of the bottle 1 can be appropriately sterilized and the deformation of the bottle 1 can be also prevented.
   The bottle 1 after being subjected to the hot water rinsing treatment is returned to the elected attitude in which the neck portion 1a of the bottle 1 is directed upward by the inverting motion of the gripper 20.
(15) The bottle 1 after being subjected to the hot water rinsing treatment is delivered to the filling section 10, and during the time of travelling around the wheel 94c in the state in which the bottle 1 is gripped by the gripper 28, a predetermined amount of soft drink "a" fills the bottle 1 from the nozzle 95 of the soft drink filling machine as shown in Fig. 3N.
(16) The bottle 1 filled up with the soft drink "a" travels around the wheel 94s while being gripped by the gripper 28, and during this traveling, as shown in Fig. 3O, the cap 2 is applied to the neck portion 1a of the bottle 1 by the capper to thereby seal the bottle 1 and complete as a product of soft drink package.

The bottle 1 formed as the soft drink package is delivered externally from the soft drink filling apparatus of the present embodiment.

### [Example]

Bottles were molded by feeding preforms made of PET and then sterilized by performing the hot water rinsing. This process was performed to a plurality of two kinds of bottles each having volume of 500ml or 2L, and results shown in the following Table 1 were obtained.

As spore, chaetomium globosum spore (heat-resisting mold) was used.

As sterilizing effect, Log Reduction Value (Log: number of adhering fungus/number of remaining fungus) was more than 6.

Further, water was poured into the bottles before and after the sterilization thereof for inspecting and confirming deformation of the bottles due to the hot water rinsing treatment. In the confirmation, the deformation was contraction (shrinkage) less than 1% in volume, and the deformation was not visually confirmed.

**[Table 1]**

| | | 500ml BOTTLE | 2L BOTTLE |
|---|---|---|---|
| RINSING NOZZLE FLOW AMOUNT | | 10 L/min | 10 L/min |
| RINSING TIME | LOWER LIMIT | 0.3 sec | 0.7 sec |
| | UPPER LIMIT | 0.5 sec | 1.0 sec |
| RINCE FLOW AMOUNT | LOWER LIMIT | 50.0 ml | 116.7 ml |
| | UPPER LIMIT | 83.3 ml | 166.7 ml |
| BOTTLE SURFACE AREA | | 430 cm² | 1050 cm² |
| AREA PER UNIT | LOWER LIMIT | 0.116 ml/cm² | 0.111 ml/cm² |
| | UPPER LIMIT | 0.194 ml/cm² | 0.159 ml/cm² |

Further, in the above example, hot water of the temperature of 70 °C to 80°C was used, and more preferably, the temperature is of 70 °C to 75°C.

From the result of the Table 1, it will be found out that the amount of the hot water contacting the inner surface of the bottle is preferably 0.1mL to 0.2mL/cm² with respect to unit area.

Further, the present invention is not limited to the above described embodiment and may be embodied with various modes or like.

For example, the container or vessel to be applied for the soft drink filling apparatus is not limited to a PET bottle, and many other resin container or vessels may be applied. Furthermore, The conveying means for conveying or delivering the preforms and the bottles are not limited to the wheels of the structures described above. Various kinds of conveying devices capable of sequentially conveying the bottles in the predetermined order, such as, for example, air conveying device, belt conveying device, bucket conveying device may be used.

### Reference Numerals

- 1: bottle
- 6: preform
- 7: molding section
- 8: inspecting section
- 8a, 9a: chamber
- 9: bottle outer surface sterilizing section
- 10: filling section
- 46: temperature sensor
- 91: hot water rinsing section
- a: soft drink
- w: hot water
- α: hydrogen peroxide condensed mist
- S1: servomotor

## Claims

1. A soft drink filling method comprising the steps of:
molding a bottle (1) of a volume of 500 ml or of a volume of 2 L from a heated preform (6) by a blow molding process;
supplying hot water having a temperature of 70 °C to 80°C into the bottle at a time when heat applied to the preform remains, in a manner such that the hot water of 0.1 mL to 0.2mL per 1 cm² comes into contact with an inner entire surface of the bottle for a predetermined time, to thereby sterilize an interior of the bottle, wherein when the bottle has a volume of 500 ml, the predetermined time is 0.3 to 0.5 seconds, or when the bottle has a volume of 2 L, the predetermined time is 0.7 to 1.0 seconds;
and filling the bottle with soft drink and then sealing the bottle.

2. The soft drink filling method according to claim 1, wherein the soft drink is an acidic drink or mineral water.

3. The soft drink filling method according to claim 1 or 2, wherein a bottle travelling path is foreseen along which molded bottles are continuously travelled till the bottles are sealed, the travelling path is provided with wheel trains around which grippers (28) are respectively provided, the grippers are turned around each of the wheels with a neck portion (1a) of the bottle being held by the gripper in a manner such that the bottles are continuously transferred from an upstream side wheel to a downstream side wheel.

4. The soft drink filling method according to any one of claims 1 to 3, wherein all the steps from the step of molding the bottle (1) from the heated preform (6) by the blow molding process to the step of filling the bottle with the soft drink and then sealing the bottle are performed while the bottles are being continuously travelled, wherein before the sterilization of the molded bottles, the temperature of the bottles on which heat from the preform heating process remains, are inspected, wherein bottles having a temperature not more than a predetermined value are rejected and only bottles having a temperature reaching the predetermined value, are sterilized and filled up with the soft drink.

5. The soft drink filling method according to claim 1, wherein hydrogen peroxide mist or gas is supplied to the outer surface of the bottle to sterilize the bottle before sterilization of the inner surface of the bottle by the hot water.

6. A soft drink filling apparatus comprising: a molding section (7) for molding a bottle (1) of a volume of 500 ml or of a volume of 2 L from a heated preform (6) by a blow molding process; a hot water rinsing section (91) for rinsing the molded bottle molded in the molding section with a hot water; and a filling section (10) for filling the bottle passing through the hot water rinsing section (91) with a soft drink, in which a travelling unit is provided from the molding section (7) to the filling section (10) through the hot water rinsing section (91) so as to continuously travel the bottle on a travelling path, wherein portion of the travelling unit, extending from the hot water rinsing section (91) to the filling section (10), is covered with a chamber, wherein the travelling unit is provided with series of star wheels arranged from the molding section (7) to the filling section (10), and grippers that turn around each of the wheels with the bottle neck portions being gripped and the bottles being transferred from an upstream side wheel to a downstream side wheel, wherein the travelling speed of each of the bottles is controlled such that the heat applied to the preform and remaining on the bottle is maintained to an extent necessary for sterilization of the bottle in the hot water rinsing section, wherein the apparatus is configured such that in the hot water rinsing section, the inside of the bottle is sterilized by supplying hot water of an amount of 0.1mL to 0.2ml/cm² at a temperature of 70°C to 80°C so as to contact an entire inner surface of the bottle for a predetermined time, wherein when the bottle has a volume of 500 ml, the predetermined time is 0.3 to 0.5 seconds, or when the bottle has a volume of 2 L, the predetermined time is 0.7 to 1.0 seconds.

7. The soft drink filling apparatus according to claim 6, wherein the travelling unit is composed of a predetermined number of star wheels, and the respective wheels are driven by corresponding respectively independent servomotors.

8. The soft drink filling apparatus according to claim 6, further comprising a gripper interference prevention unit (42) for preventing interference between respective grippers (28, 37) from each other at a time when a wheel on the molding section side and a downstream side wheel adjacent to the aforementioned wheel is stopped.

9. The soft drink filling apparatus according to claim 6, wherein a hydrogen peroxide supply unit (59) is disposed just before the hot water rinsing section (91), and the outer surface of the bottle is sterilized by hydrogen peroxide mist or gas from the hydrogen peroxide supply unit (59).

## Patentansprüche

1. Ein Erfrischungsgetränkfüllverfahren, aufweisend die Schritte:
Formen einer Flasche (1) mit einem Volumen von 500 mL oder mit einem Volumen von 2 L aus einem erwärmten/erhitzen Vorformling (6) durch ein Blasformverfahren,
Zuführen von heißem Wasser, das eine Temperatur von 70°C bis 80°C hat, in die Flasche, zu einer Zeit, bei der Wärme, die auf den Vorformling angewandt wurde, verbleibt, in einer Art, sodass das heiße Wasser von 0,1 mL bis 0,2 mL pro 1 cm² mit einer inneren gesamten Oberfläche der Flasche für eine vorbestimmte Zeit in Kontakt kommt, um dadurch ein Inneres der Flasche zu sterilisieren, wobei die vorbestimmte Zeit 0,3 bis 0,5 Sekunden ist, wenn die Flasche ein Volumen von 500 mL hat, oder die vorbestimmte Zeit 0,7 bis 1,0 Sekunden ist, wenn die Flasche ein Volumen von 2 L hat, und
Füllen der Flasche mit einem Erfrischungsgetränk und dann Verschließen der Flasche.

2. Das Erfrischungsgetränkfüllverfahren gemäß Anspruch 1, wobei das Erfrischungsgetränk ein saures Getränk oder ein Mineralwasser ist.

3. Das Erfrischungsgetränkfüllverfahren gemäß Anspruch 1 oder 2, wobei ein Flaschentransferpfad vorgesehen ist, entlang welchem die geformten Flaschen kontinuierlich bewegt werden, bis die Flaschen verschlossen werden, wobei der Transferpfad mit Rädern bereitgestellt ist, um welche herum Greifer (28) bereitgestellt sind, wobei die Greifer um jedes der Räder herum bewegt werden, wobei ein Halsabschnitt (1a) der Flasche durch den Greifer gehalten wird, in einer Art, sodass die Flaschen kontinuierlich von einem Stromaufwärtsseite-Rad zu einem Stromabwärtsseite-Rad bewegt werden.

4. Das Erfrischungsgetränkfüllverfahren gemäß irgendeinem der Ansprüche 1 bis 3, wobei alle Schritte von dem Schritt des Formens der Flasche (1) aus dem erhitzen Vorformling (6) durch das Blasformverfahren bis zu dem Schritt des Füllens der Flasche mit dem Erfrischungsgetränk und dann Verschließen der Flasche ausgeführt werden, während die Flaschen kontinuierlich bewegt werden, wobei vor dem Sterilisieren der geformten Flaschen die Temperatur der Flaschen, an denen Wärme von dem Vorformling-Erhitzen-Prozess verbleibt, geprüft wird, wobei Flaschen, die eine Temperatur von nicht mehr als einem vorbestimmtem Wert haben, verworfen werden und nur Flaschen, die eine Temperatur haben, die den vorbestimmten Wert erreicht, sterilisiert werden und mit dem Erfrischungsgetränk gefüllt werden.

5. Das Erfrischungsgetränkfüllverfahren gemäß Anspruch 1, wobei der äußeren Oberfläche der Flasche Wasserstoffperoxid-Nebel oder -Gas zugeführt wird, um die Flasche zu sterilisieren, vor dem Sterilisieren der inneren Oberfläche der Flasche durch das heiße Wasser.

6. Eine Erfrischungsgetränkfüllvorrichtung, aufweisend: einen Formabschnitt (7) zum Formen einer Flasche (1) mit einem Volumen von 500 mL oder mit einem Volumen von 2 L aus einem erwärmten/erhitzen Vorformling (6) durch ein Blasformverfahren, einen Heißwasserspülabschnitt (91) zum Spülen der geformten Flasche, die in dem Formabschnitt geformt wurde, mit heißem Wasser, und einen Füllabschnitt (10) zum Füllen der Flasche, die durch den Heißwasserspülabschnitt (91) hindurchtritt, mit einem Erfrischungsgetränk, wobei eine Transfereinheit von dem Formabschnitt (7) zu dem Füllabschnitt (10) durch den Heißwasserspülabschnitt (91) bereitgestellt ist, um die Flasche kontinuierlich auf einem Transferpfad zu bewegen, wobei ein Abschnitt der Transfereinheit, der sich von dem Heißwasserspülabschnitt (91) zu dem Füllabschnitt (10) erstreckt, mit einer Kammer abgedeckt ist, wobei die Transfereinheit mit einer Serie von Rädern, die von dem Formabschnitt (7) zu dem Füllabschnitt (10) angeordnet sind, und mit Greifern bereitgestellt ist, welche um ein jeweiliges der Räder herum bewegt werden, wobei die Flaschenhalsabschnitte gehalten werden und die Flaschen von einem Stromaufwärtsseite-Rad zu einem Stromabwärtsseite-Rad bewegt/transferiert werden, wobei die Bewegungsgeschwindigkeit von jeder der Flaschen gesteuert ist/wird, sodass die Wärme, die auf den Vorformling angewandt wurde und an der Flasche verbleibt, in einem Ausmaß aufrechterhalten ist/wird, das zum Sterilisieren der Flasche in dem Heißwasserspülabschnitt notwendig ist, wobei die Vorrichtung konfiguriert ist, sodass in dem Heißwasserspülabschnitt das Innere der Flasche sterilisiert wird durch Zuführen von heißem Wasser in einer Menge von 0,1 mL bis 0,2 mL pro 1 cm² bei einer Temperatur von 70°C bis 80°C, um mit einer inneren gesamten Oberfläche der Flasche für eine vorbestimmte Zeit in Kontakt zu sein, wobei die vorbestimmte Zeit 0,3 bis 0,5 Sekunden ist, wenn die Flasche ein Volumen von 500 mL hat, oder die vorbestimmte Zeit 0,7 bis 1,0 Sekunden ist, wenn die Flasche ein Volumen von 2 L hat.

7. Die Erfrischungsgetränkfüllvorrichtung gemäß Anspruch 6, wobei die Transfereinheit aus einer vorgegebenen Zahl von Rädern zusammengesetzt ist und die entsprechenden Räder durch entsprechende unabhängige Servomotoren angetrieben werden.

8. Die Erfrischungsgetränkfüllvorrichtung gemäß Anspruch 6, ferner aufweisend eine Greifer-Störung-Verhinderungseinheit (42) zum Verhindern einer Störung zwischen entsprechenden Greifern (28, 37), zu einer Zeit, wenn ein Rad auf der Formabschnittseite und ein Stromabwärtsseite-Rad benachbart des vorgenannten Rads gestoppt ist.

9. Die Erfrischungsgetränkfüllvorrichtung gemäß Anspruch 6, wobei eine Wasserstoffperoxid-Zuführeinheit (59) kurz vor dem Heißwasserspülabschnitt (91) angeordnet ist und die äußere Oberfläche der Flasche durch Wasserstoffperoxid-Nebel oder -Gas aus der Wasserstoffperoxid-Zuführeinheit (59) sterilisiert wird.

## Revendications

1. Procédé de remplissage de boisson comprenant les étapes qui consistent à :
mouler une bouteille (1) d'un volume de 500 ml ou d'un volume de 2 L à partir d'une préforme chauffée (6), à l'aide d'un processus de moulage par soufflage ;
fournir de l'eau chaude à une température de 70°C à 80°C à la bouteille au moment où la chaleur appliquée à la préforme reste, de sorte que l'eau chaude de 0,1 mL à 0,2 mL par cm² entre en contact avec une surface intérieure entière de la bouteille pendant une durée prédéterminée, de façon à stériliser l'intérieur de la bouteille, la bouteille ayant un volume de 500 ml, la durée prédéterminée étant de 0,3 à 0,5 seconde, ou, lorsque la bouteille possède un volume de 2 L, la durée prédéterminée étant de 0,7 à 1 seconde ;
et remplir la bouteille avec ladite boisson puis fermer la bouteille.

2. Procédé de remplissage de boisson selon la revendication 1, dans lequel la boisson est un boisson acide ou de l'eau minérale.

3. Procédé de remplissage de boisson selon la revendication 1 ou 2, dans lequel un trajet de déplacement de bouteille est prévu, le long duquel des bouteilles moulées se déplacent en continu jusqu'à ce qu'elles soient fermées, le trajet de déplacement étant muni de trains de roues autour desquels des pinces (28) sont respectivement prévues, les pinces étant tournées autour de chacune des roues avec une partie de goulot (1a) de la bouteille qui est maintenue par la pince de sorte que les bouteilles soient transférées en continu entre une roue côté amont et une roue côté aval.

4. Procédé de remplissage de boisson selon l'une quelconque des revendications 1 à 3, dans lequel toutes les étapes comprises entre l'étape de moulage de la bouteille (1) à partir de la préforme chauffée (6) à l'aide du processus de moulage par soufflage et l'étape de remplissage de la bouteille avec la boisson et de fermeture de la bouteille sont exécutées pendant que les bouteilles sont déplaces en continu, dans lequel, avant la stérilisation des bouteilles moulées, la température des bouteilles sur lesquelles reste la chaleur issue du processus de chauffage de préforme est inspectée, dans lequel les bouteilles qui présentent une température non supérieure à une valeur prédéterminée sont rejetées, et seules les bouteilles qui présentent une température qui atteint la valeur prédéterminée sont stérilisées et remplies avec la boisson.

5. Procédé de remplissage de boisson selon la revendication 1, dans lequel une brume de peroxyde d'hydrogène ou un gaz est fourni(e) à la surface extérieure de la bouteille afin de stériliser la bouteille avant la stérilisation de la surface intérieure de la bouteille par l'eau chaude.

6. Appareil de remplissage de boisson comprenant : une section de moulage (7) destinée à mouler une bouteille (1) d'un volume de 500 ml ou d'un volume de 2 L à partir d'une préforme chauffée (6) à l'aide d'un processus de moulage par soufflage ; une section de rinçage à l'eau chaude (91) destinée à rincer la bouteille moulée dans la section de moulage avec de l'eau chaude ; et une section de remplissage (10) destinée à remplir la bouteille qui passe par la section de rinçage à l'eau chaude (91) avec une boisson,
dans lequel une unité de déplacement est prévue entre la section de moulage (7) et la section de remplissage (10), en passant par la section de rinçage à l'eau chaude (91), de façon à déplacer en continu la bouteille sur un trajet de déplacement, une partie de l'unité de déplacement s'étendant entre la section de rinçage à l'eau chaude (91) et la section de remplissage (10) étant couverte par une chambre, l'unité de déplacement étant munie d'une série de roues en étoile placées entre la section de moulage (7) et la section de remplissage (10), et de pinces qui tournent autour des roues avec les parties de goulot des bouteilles sui sont attrapées, les bouteilles étant transférées entre une roue côté amont et une roue côté aval, la vitesse de déplacement de chacune des bouteilles étant régulée de sorte que la chaleur appliquée à la préforme et qui reste sur la bouteille soit maintenue dans une mesure nécessaire pour stériliser la bouteille dans la section de rinçage à l'eau chaude, l'appareil étant configuré de sorte que, dans la section de rinçage à l'eau chaude, l'intérieur de la bouteille soit stérilisé en fournissant de l'eau chaude selon une quantité de 0,1 mL à 0,2 mL à une température de 70°C à 80°C afin de toucher une surface intérieure entière de la bouteille pendant une durée prédéterminée, dans lequel, lorsque la bouteille possède un volume de 500 mL, la durée prédéterminée est de 0,3 à 0,5 secondes, ou, lorsque la bouteille possède un volume de 2 L, la durée prédéterminée est de 0,7 à 1 seconde.

7. Appareil de remplissage de boisson selon la revendication 6, dans lequel l'unité de déplacement est composée d'un nombre prédéterminé de roues en étoile, et les roues respectives sont entraînées par des servomoteurs correspondants respectivement indépendants.

8. Appareil de remplissage de boisson selon la revendication 6, comprenant en outre une unité de prévention d'interférence entre les pinces (42) destinée à empêcher toute interférence entre des pinces respectives (28, 37) à un moment auquel une roue située sur la section de moulage et une roue côté aval adjacente à la roue susmentionnée sont arrêtées.

9. Appareil de remplissage de boisson selon la revendication 6, dans lequel une unité d'alimentation en peroxyde d'hydrogène (59) est disposé juste avant la section de rinçage à l'eau chaude (91), et la surface extérieure de la bouteille est stérilisée par une brume de peroxyde d'hydrogène ou un gaz qui provient de l'unité d'alimentation en peroxyde d'hydrogène (59).
